(19) **Europäisches Patentamt / European Patent Office / Office européen des brevets**

(11) **EP 4 626 110 A1**

(12) **EUROPEAN PATENT APPLICATION**
published in accordance with Art. 153(4) EPC

(43) Date of publication:
**01.10.2025 Bulletin 2025/40**

(21) Application number: **24755977.6**

(22) Date of filing: **30.01.2024**

(51) International Patent Classification (IPC):
*H04W 72/1263* (2023.01)

(52) Cooperative Patent Classification (CPC):
**H04W 72/1263**

(86) International application number:
**PCT/CN2024/074753**

(87) International publication number:
**WO 2024/169603 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.02.2023 CN 202310139593**

(71) Applicant: **Huawei Technologies Co., Ltd.
Shenzhen, Guangdong 518129 (CN)**

(72) Inventors:
- **CAO, Youlong
Shenzhen, Guangdong 518129 (CN)**
- **XU, Rui
Shenzhen, Guangdong 518129 (CN)**
- **CHEN, Erkai
Shenzhen, Guangdong 518129 (CN)**
- **QIN, Yi
Shenzhen, Guangdong 518129 (CN)**
- **MI, Xiang
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **METHOD AND APPARATUS FOR TRANSMITTING INFORMATION**

(57) An information transmission method and an apparatus are provided, and relate to the field of wireless communication. The method includes: obtaining first configuration information used to configure a reporting periodicity of first indication information; and sending the first indication information on at least one configured grant (configured grant, CG) transmission occasion within a CG period based on the reporting periodicity. The first indication information indicates a CG transmission occasion that is unused within the CG period or a CG transmission occasion that is used within the CG period. In this way, a terminal can report, based on the configured reporting periodicity, the CG transmission occasion that is unused within the CG period to a base station, thereby saving resources.

FIG. 4

Processed by Luminess, 75001 PARIS (FR)

## Description

This application claims priority to Chinese Patent Application No. 202310139593.9, filed with the China National Intellectual Property Administration on February 14, 2023 and entitled "INFORMATION TRANSMISSION METHOD, AND APPARATUS", which is incorporated herein by reference in its entirety.

## TECHNICAL FIELD

This application relates to the field of wireless communication, and in particular, to an information transmission method and an apparatus.

## BACKGROUND

In a communication system, a base station may configure a configured grant (configured grant, CG) transmission occasion within a CG period for a terminal in a CG manner. Subsequently, the terminal may periodically send to-be-sent data to the base station by using the CG transmission occasion. It may be understood that sizes of data that can be carried on CG transmission occasions within different CG periods are the same, and sizes of to-be-sent data within the different CG periods may be different. Therefore, to ensure that to-be-sent data within each CG period is carried on a corresponding CG transmission occasion, the base station usually configures a large quantity of CG transmission occasions for the terminal within one CG period, leading to a waste of resources.

## SUMMARY

This application provides an information transmission method and an apparatus, so that a terminal can report, based on a configured reporting periodicity, a CG transmission occasion that is unused within a CG period to a base station, thereby saving resources.

To achieve the foregoing objective, the following technical solutions are used in this application.

According to a first aspect, an information transmission method is provided. The method may be performed by a terminal; or may be performed by a module used in the terminal, for example, a chip, a chip system, or a circuit; or may be implemented by a logical node, a logical module, or software that can implement all or some functions of the terminal. This is not limited herein. For ease of description, an example in which the method is performed by the terminal is used for description below. The method includes: obtaining first configuration information, where the first configuration information is used to configure a reporting periodicity of first indication information, and the first indication information indicates a configured grant CG transmission occasion that is unused within a CG period or a CG transmission occasion that is used within a CG period; and sending the first indication information on at least one CG transmission occasion within the CG period based on the reporting periodicity.

According to the method provided in the first aspect, the terminal may obtain the reporting periodicity of the first indication information, and send the first indication information based on the reporting periodicity. In this way, a node that receives the first indication information, for example, a radio access network (radio access network, RAN) node, may determine, based on the first indication information, the CG transmission occasion that is unused within the CG period, thereby saving resources. For example, the RAN node may reallocate the unused CG transmission occasion, for example, allocate the unused CG transmission occasion to another service of the terminal in a configured scheduling (configured scheduling, CS) manner, or allocate the unused CG transmission occasion to another terminal other than this terminal.

In a possible implementation, the reporting periodicity is N+1 or N, N represents a quantity of CG transmission occasions between two adjacent CG transmission occasions on which the first indication information is carried within the CG period, and N is an integer greater than or equal to 0; or the reporting periodicity is T, and T represents a time difference between two adjacent CG transmission occasions on which the first indication information is carried within the CG period.

Based on the foregoing possible implementation, the terminal may report the first indication information based on N, N+1, or T, to improve flexibility of reporting the first indication information by the terminal.

In a possible implementation, the first configuration information is further used to configure a $1^{st}$ CG transmission occasion on which the first indication information is carried within the CG period.

Based on the foregoing possible implementation, the first configuration information may be used to configure a start CG transmission occasion on which the first indication information is carried within the CG period, to adjust time at which the terminal sends the first indication information. For example, the start CG transmission occasion is configured, so that the terminal delays sending the first indication information. For example, the terminal sends the first indication information after receiving a tail packet indicator, thereby reducing signaling overheads.

In a possible implementation, the at least one CG transmission occasion includes a first CG transmission occasion and a second CG transmission occasion, and the first CG transmission occasion precedes the second CG transmission occasion; and a quantity of unused CG transmission occasions indicated by the first indication information carried on the first CG transmission occasion is M1, a quantity of unused CG transmission occasions indicated by the first indication information carried on the second CG transmission occasion is M2, and M1 is less than M2; or a quantity of used CG transmission occasions indicated by the first indication information carried on the first CG transmission occasion is M3, a quantity of used CG transmission occasions indicated by the first indication information carried on the second CG transmission occasion is M4, and M3 is greater than M4.

Based on the foregoing possible implementation, within the CG period, a quantity of unused CG transmission occasions indicated by the first indication information sent earlier is less than a quantity of unused CG transmission occasions indicated by the first indication information sent later; or within the CG period, a quantity of used CG transmission occasions indicated by the first indication information sent earlier is greater than a quantity of used CG transmission occasions indicated by the first indication information sent later. In this way, it can be avoided that, after the RAN node reallocates the unused CG transmission occasions, the terminal indicates that these CG transmission occasions need to be used, leading to related interference between terminals.

In a possible implementation, the quantity of unused CG transmission occasions or the quantity of used CG transmission occasions is related to a buffer state of the terminal.

Based on the foregoing possible implementation, the terminal may determine, based on the buffer state of the terminal, a quantity of CG transmission occasions that are unused within the CG period or a quantity of CG transmission occasions that are used within the CG period. This implementation is simple.

In a possible implementation, the first configuration information is further used to configure a first interval, the at least one CG transmission occasion includes a third CG transmission occasion, the first indication information carried on the third CG transmission occasion indicates that the unused CG transmission occasions include a fourth CG transmission occasion, and there is the first interval between the third CG transmission occasion and the fourth CG transmission occasion.

Based on the foregoing possible implementation, the first indication information may indicate that a CG transmission occasion that has the first interval from a CG transmission occasion on which the first indication information is carried is unused, to reserve time for the RAN node to reallocate the unused CG transmission occasion.

In a possible implementation, the unused CG transmission occasions further include a CG transmission occasion following the fourth CG transmission occasion within the CG period.

Based on the foregoing possible implementation, if the first indication information indicates that the fourth CG transmission occasion is unused, the RAN node may determine that the CG transmission occasion following the fourth CG transmission occasion is unused either. In this way, the first indication information may not need to indicate whether the CG transmission occasion following the fourth CG transmission occasion is used.

In a possible implementation, an interval between each CG transmission occasion of the at least one CG transmission occasion and a CG transmission occasion that is unused within the CG period is greater than a first threshold.

Based on the foregoing possible implementation, time may be reserved for the RAN node to reallocate the CG transmission occasion that is unused within the CG period.

In a possible implementation, the first configuration information is further used to configure the first threshold.

Based on the foregoing possible implementation, the first configuration information may be used to configure a minimum interval between each CG transmission occasion of the at least one CG transmission occasion and a CG transmission occasion that is unused within the CG period, so that the terminal reports the first indication information based on the minimum interval. In this way, the RAN node may have sufficient time to reallocate the CG transmission occasion that is unused within the CG period.

In a possible implementation, the first configuration information is further used to configure a CG transmission occasion within the CG period.

Based on the foregoing possible implementation, the first configuration information may further be used to configure the CG transmission occasion within the CG period, so that the terminal performs data transmission by using the configured CG transmission occasion.

According to a second aspect, an information transmission method is provided. The method may be performed by a RAN node; or may be performed by a module used in the RAN node, for example, a chip, a chip system, or a circuit; or may be implemented by a logical node, a logical module, or software that can implement all or some functions of the RAN node. This is not limited herein. For ease of description, an example in which the method is performed by the RAN node is used for description below. The method includes: outputting first configuration information, where the first configuration information is used to configure a reporting periodicity of first indication information, and the first indication information indicates a configured grant CG transmission occasion that is unused within a CG period or a CG transmission occasion that is used within a CG period; and receiving the first indication information on at least one CG transmission occasion within the CG period based on the reporting periodicity.

According to the method provided in the second aspect, the RAN node may configure the reporting periodicity of the first indication information, and receive the first indication information based on the reporting periodicity, to determine, based on the first indication information, the CG transmission occasion that is unused within the CG period, thereby saving resources. For example, the RAN node may reallocate the unused CG transmission occasion, for example, allocate, in a CS manner, the unused CG transmission occasion to another service of the terminal that reports the first indication information, or allocate the unused CG transmission occasion to another terminal other than this terminal.

In a possible implementation, the reporting periodicity is N+1 or N, N represents a quantity of CG transmission occasions between two adjacent CG transmission occasions on which the first indication information is carried within the CG period, and N is an integer greater than or equal to 0; or the reporting periodicity is T, and T represents a time difference between two adjacent CG transmission occasions on which the first indication information is carried within the CG period.

Based on the foregoing possible implementation, the RAN node may configure that the terminal reports the first indication information based on N, N+1, or T, to improve flexibility of reporting the first indication information by the terminal.

In a possible implementation, the first configuration information is further used to configure a 1st CG transmission occasion on which the first indication information is carried within the CG period.

Based on the foregoing possible implementation, the first configuration information may be used to configure a start CG transmission occasion on which the first indication information is carried within the CG period, to adjust time at which the terminal sends the first indication information. For example, the start CG transmission occasion is configured, so that the terminal delays sending the first indication information. For example, the terminal sends the first indication information after receiving a tail packet indicator, thereby reducing signaling overheads.

In a possible implementation, the at least one CG transmission occasion includes a first CG transmission occasion and a second CG transmission occasion, and the first CG transmission occasion precedes the second CG transmission occasion; and a quantity of unused CG transmission occasions indicated by the first indication information carried on the first CG transmission occasion is M1, a quantity of unused CG transmission occasions indicated by the first indication information carried on the second CG transmission occasion is M2, and M1 is less than M2; or a quantity of used CG transmission occasions indicated by the first indication information carried on the first CG transmission occasion is M3, a quantity of used CG transmission occasions indicated by the first indication information carried on the second CG transmission occasion is M4, and M3 is greater than M4.

Based on the foregoing possible implementation, within the CG period, a quantity of unused CG transmission occasions indicated by the first indication information sent earlier is less than a quantity of unused CG transmission occasions indicated by the first indication information sent later; or within the CG period, a quantity of used CG transmission occasions indicated by the first indication information sent earlier is greater than a quantity of used CG transmission occasions indicated by the first indication information sent later. In this way, it can be avoided that, after the RAN node reallocates the unused CG transmission occasions, the terminal indicates that these CG transmission occasions are to be used, leading to related interference between terminals.

In a possible implementation, the first configuration information is further used to configure a first interval, the at least one CG transmission occasion includes a third CG transmission occasion, the first indication information carried on the third CG transmission occasion indicates that the unused CG transmission occasions include a fourth CG transmission occasion, and there is the first interval between the third CG transmission occasion and the fourth CG transmission occasion.

Based on the foregoing possible implementation, the first indication information may indicate that a CG transmission occasion that has the first interval from a CG transmission occasion on which the first indication information is carried is unused, to reserve time for the RAN node to reallocate the unused CG transmission occasion.

In a possible implementation, the unused CG transmission occasions further include a CG transmission occasion following the fourth CG transmission occasion within the CG period.

Based on the foregoing possible implementation, if the first indication information indicates that the fourth CG transmission occasion is unused, the RAN node may determine that the CG transmission occasion following the fourth CG transmission occasion is unused either. In this way, the first indication information may not need to indicate whether the CG transmission occasion following the fourth CG transmission occasion is used.

In a possible implementation, an interval between each CG transmission occasion of the at least one CG transmission occasion and a CG transmission occasion that is unused within the CG period is greater than a first threshold.

Based on the foregoing possible implementation, time may be reserved for the RAN node to reallocate the CG transmission occasion that is unused within the CG period.

In a possible implementation, the first configuration information is further used to configure the first threshold.

Based on the foregoing possible implementation, the first configuration information may be used to configure a minimum interval between each CG transmission occasion of the at least one CG transmission occasion and a CG transmission occasion that is unused within the CG period, so that the terminal reports the first indication information based on the minimum interval. In this way, the RAN node may have sufficient time to reallocate the CG transmission occasion that is unused within the CG period.

In a possible implementation, the first configuration information is further used to configure a CG transmission occasion within the CG period.

Based on the foregoing possible implementation, the first configuration information may further be used to configure the CG transmission occasion within the CG period, so that the terminal performs data transmission by using the configured CG transmission occasion.

According to a third aspect, a communication apparatus is provided, to implement the foregoing methods. The communication apparatus may be the terminal in the first aspect, an apparatus including the terminal, or a module in the terminal in the first aspect, for example, a chip, a chip system, or a circuit; or may be a logical node, a logical module, or a software implementation that can implement some or all functions of the terminal. Alternatively, the communication apparatus may be the RAN node in the second aspect, an apparatus including the RAN node, or a module in the RAN node in the second aspect, for example, a chip, a chip system, or a circuit; or may be a logical node, a logical module, or a software implementation that can implement some or all functions of the RAN node. The communication apparatus includes a corresponding module, unit, or means (means) for implementing the foregoing methods. The module, unit, or means may be implemented by hardware, software, or hardware executing corresponding software. The hardware or the software includes one or more modules or units corresponding to the foregoing functions.

With reference to the third aspect, in a possible implementation, the communication apparatus may include a processing module and an interface module. The processing module may be configured to implement a processing function in any one of the foregoing aspects and the possible implementations of the foregoing aspects. The processing module may be, for example, a processor. The interface module may also be referred to as an interface unit, and is configured to implement a sending function and/or a receiving function in any one of the foregoing aspects and the possible implementations of the foregoing aspects. The interface module may include an interface circuit, a transceiver machine, a transceiver, or a communication interface.

With reference to the third aspect, in a possible implementation, the interface module includes a sending module and a receiving module that are respectively configured to implement the sending and receiving functions in any one of the foregoing aspects and the possible implementations of the foregoing aspects.

According to a fourth aspect, a communication apparatus is provided, and includes a processor. The processor is configured to: be coupled to a memory, and after reading instructions in the memory, perform the method according to any one of the foregoing aspects based on the instructions. The communication apparatus may be the terminal in the first aspect, an apparatus including the terminal, or a module in the terminal in the first aspect, for example, a chip, a chip system, or a circuit; or may be a logical node, a logical module, or a software implementation that can implement some or all functions of the terminal. Alternatively, the communication apparatus may be the RAN node in the second aspect, an apparatus including the RAN node, or a module in the RAN node in the second aspect, for example, a chip, a chip system, or a circuit; or may be a logical node, a logical module, or a software implementation that can implement some or all functions of the RAN node.

With reference to the fourth aspect, in a possible implementation, the communication apparatus further includes a memory. The memory is configured to store necessary program instructions and data.

With reference to the fourth aspect, in a possible implementation, the communication apparatus is a chip or a chip system. Optionally, when the communication apparatus is a chip system, the communication apparatus may include a chip, or may include a chip and another discrete component.

According to a fifth aspect, a communication apparatus is provided, and includes a processor and an interface circuit. The interface circuit is configured to receive a computer program or instructions, and transmit the computer program or the instructions to the processor. The processor is configured to execute the computer program or the instructions, to enable the communication apparatus to perform the method according to any one of the foregoing aspects. The communication apparatus may be the terminal in the first aspect, an apparatus including the terminal, or a module in the terminal in the first aspect, for example, a chip, a chip system, or a circuit; or may be a logical node, a logical module, or a software implementation that can implement some or all functions of the terminal. Alternatively, the communication apparatus may be the RAN node in the second aspect, an apparatus including the RAN node, or a module in the RAN node in the second aspect, for example, a chip, a chip system, or a circuit; or may be a logical node, a logical module, or a software implementation that can implement some or all functions of the RAN node.

With reference to the fifth aspect, in a possible implementation, the communication apparatus is a chip or a chip system. Optionally, when the communication apparatus is a chip system, the communication apparatus may include a chip, or may include a chip and another discrete component.

According to a sixth aspect, a computer-readable storage medium is provided. The computer-readable storage medium stores instructions, and when the instructions are run on a computer, the computer is enabled to perform the method according to any one of the foregoing aspects.

According to a seventh aspect, a computer program product including instructions is provided. When the computer program product runs on a computer, the computer is enabled to perform the method according to

**EP 4 626 110 A1**

any one of the foregoing aspects.

According to an eighth aspect, a communication system is provided. The communication system includes the terminal configured to perform the method in the first aspect and the RAN node configured to perform the method in the second aspect.

For technical effects achieved by any one of the possible implementations of the third aspect to the eighth aspect, refer to technical effects achieved by any one of the first aspect, the second aspect, or different possible implementations of the first aspect or the second aspect. Details are not described herein again.

It may be understood that the solutions in the foregoing aspects may be combined on a premise that the solutions are not contradictory.

**BRIEF DESCRIPTION OF DRAWINGS**

FIG. 1A is a first diagram of CG resources;

FIG. 1B is a second diagram of CG resources;

FIG. 2 is a diagram of an architecture of a communication system according to an embodiment of this application;

FIG. 3 is a diagram of a hardware structure of a communication apparatus according to an embodiment of this application;

FIG. 4 is a schematic flowchart of an information transmission method according to this application;

FIG. 5A is a first diagram of a reporting periodicity of first indication information according to this application;

FIG. 5B is a second diagram of a reporting periodicity of first indication information according to this application;

FIG. 6A is a first diagram of a CG transmission opportunity on which first indication information is carried according to this application;

FIG. 6B is a second diagram of a CG transmission opportunity on which first indication information is carried according to this application; and

FIG. 7 is a diagram of a structure of a communication apparatus according to this application.

**DESCRIPTION OF EMBODIMENTS**

Before the technical solutions of this application are described, related technical terms and procedures in this application are explained and described. It may be understood that the explanations and descriptions are intended to facilitate understanding of embodiments of this application, but should not be construed as a limitation on the protection scope claimed in embodiments of this application.

1. Extended reality (extended reality, XR)

The XR may refer to a combination of real and virtual environments generated by using computing technologies and wearable devices, and human-machine interaction. The XR has advantages such as a plurality of views and strong interactivity, can provide brand-new experience for a user, and has a great application value and a great commercial potential. The XR mainly includes virtual-reality interaction technologies, for example, virtual reality (virtual reality, VR) and augmented reality (augmented reality, AR), and can be widely applied to many fields such as entertainment, gaming, medical care, advertising, industry, online education, and engineering. The following describes the VR technology and the AR technology separately.

In the VR technology, a plurality of technologies such as computer graphics and multimedia are integrated, to simulate functions of human sensory organs such as visual, auditory, and tactile senses. In this way, people immerse in a virtual world generated by a computer, feel as if they are there, and perform real-time communication by using a language, a gesture, and the like. This enhances immersion. By using the VR technology, people feel verisimilitude of the real world, and can further break through restrictions such as time and space, to have wonderful experience of entering the virtual world. The VR technology usually requires the user to wear an XR terminal (for example, a head-mounted device) to simulate a visual and/or auditory and/or tactile sense of the user. The VR technology may be further used to perform action tracking on the user, to update simulated visual and/or auditory and/or tactile content in a timely manner. For example, in the VR technology, state information (for example, location information and posture information of a user) of a user may be processed, to display, on the XR terminal, scenario content corresponding to the state information of the user.

In the AR technology, by using a computer technology, virtual information is superimposed to the real world, is displayed through devices such as a mobile phone, a tablet computer, and glasses, and is perceived by people. In this way, integration of reality and virtuality is achieved, and the real world is enriched. In short, more information is given to a real object, to enhance a stereoscopic sense, and enhance a visual effect and interactive experience. For example, in the AR technology, perceived visual information (usually, the visual information includes depth information) may be processed, so that virtual information is integrated with the real world and is perceived by a user, thereby implementing "enhancement" of the real world.

It can be learned from the foregoing descriptions of the VR technology and the AR technology that, to implement effect of VR or AR, information (for example, state information or perceived visual information of a user) in the real world needs to be processed. If all these processing processes are performed on the terminal, a calculation amount of the terminal is increased, which is contrary to a market requirement for implementing terminal lightweight and improving terminal mobility.

To resolve this problem, a solution is proposed to apply concepts and technologies of cloud computing and cloud rendering to an XR service.

2. Cloud virtual reality (Cloud VR) and cloud augmented reality (Cloud AR)

The cloud virtual reality is to apply concepts and technologies of cloud computing and cloud rendering to a VR service. The cloud augmented reality is to apply concepts and technologies of cloud computing and cloud rendering to an AR service. In both the cloud virtual reality and the cloud augmented reality, real-world information perceived by a terminal can be sent to a cloud through a high-speed and stable network (for example, sent to the cloud through a base station). The cloud processes the received information to obtain encoded and compressed information such as a display output and an audio output, and sends the information to the terminal through the high-speed and stable network (for example, send the information to the terminal through a base station). In this way, cloud-based delivery and cloud rendering of VR/AR service content are implemented, to meet a market requirement for implementing terminal lightweight and mobility.

It may be understood that, in a video transmission service, for example, in a process in which the terminal sends perceived information in the real world to the cloud, or in a process in which the cloud sends, to the terminal, encoded and compressed information such as a display output and a sound output that are obtained through processing, to-be-sent data is usually periodically sent based on a frame rate, and a data amount is usually large. For example, for a video with a frame rate of 60 frames per second (frame per second, FPS), each video frame arrives at an interval of 16.67 milliseconds (ms). If the video frame is a 4K video frame, a size of the video frame is approximately 30 KB to 100 KB. In addition, sizes of different video frames are usually variable, and due to different compression ratios and frame types of different video frames, sizes of the different video frames differ greatly.

It may be understood that the cloud virtual reality and the cloud augmented reality have different characteristics, and therefore, service models of the cloud virtual reality and the cloud augmented reality are different. Specifically, in a cloud virtual reality service, a change of scenario content display is related to a posture or a location (action) of a user. Therefore, the terminal mainly sends location information and posture information of the user to the cloud, a data amount is small, and an uplink rate of the network is approximately tens of kbit/s. The cloud mainly sends a rendered video stream to the terminal, a data amount is large, and a downlink rate of the network may reach tens to hundreds of Mbit/s. Different from that of the cloud virtual reality service, a change of scene content display of a cloud augmented reality service is related to a change of a gaze focusing target of a user and a change of a spatial relationship (for example, a change of a spatial relationship caused by a user action) between a location and the gaze focusing target of the user. Therefore, the terminal mainly sends perceived visual information (the visual information includes depth information) to the cloud, for example, a clear and stable picture or video stream, or environment feature information extracted from the visual information, and a data amount is large. For example, usually, a network uplink rate needed for initial experience of the cloud augmented reality service is approximately 2 Mbit/s, and a network uplink rate needed for advanced experience is approximately 10 Mbit/s to 20 Mbit/s. A size of data sent by the cloud to the terminal is small. In conclusion, the cloud virtual reality service has a high requirement on a downlink transmission rate, and the cloud augmented reality service has a high requirement on an uplink transmission rate.

3. CG

A RAN node may configure a periodic uplink resource for a terminal in a CG manner. The terminal may periodically and repeatedly use the uplink resource to perform uplink transmission. For example, the RAN node may configure the periodic uplink resource for the terminal in the following manner 1 or manner 2.

Manner 1 specifically includes the following step.

S3.1: The RAN node outputs second configuration information. Correspondingly, the terminal obtains the second configuration information.

That the RAN node outputs the second configuration information may be understood as that the RAN node sends the second configuration information to another apparatus. For example, the RAN node sends the second configuration information to the terminal. Alternatively, that the RAN node outputs the second configuration information may be understood as that the RAN node implementing some functions of a base station outputs the second configuration information to another RAN node implementing some functions of the base station. For example, a distributed unit (distributed unit, DU) outputs the second configuration information to a radio unit (radio unit, RU).

That the terminal obtains the second configuration information may be understood as that the terminal receives the second configuration information from another apparatus. For example, the terminal receives the second configuration information from the RAN node. Alternatively, that the terminal obtains the second configuration information may be understood as that a module of the terminal obtains the second configuration information from another module of the terminal. For example, a baseband processing module of the terminal may restore a baseband signal from a radio frequency module, and then decode the baseband signal to obtain the second configuration information.

The second configuration information is used to configure and activate a CG resource. For example, the second configuration information includes information about a CG periodicity, information about a plurality of CG transmission occasions (CG occasions) within one CG period, and the like. In this application, the CG transmission occasion may be understood as a CG time frequency resource or a CG time domain resource, and is used for transmission of uplink data. Optionally, the second configuration information further includes a piece of indication information, and the indication information indicates to activate the CG resource.

In a possible design, the second configuration information is carried in a radio resource control (radio resource control, RRC) message.

In this application, the CG transmission occasion may be further named in another manner, for example, a CG transmission opportunity, a CG physical uplink shared channel (physical uplink shared channel, PUSCH) transmission opportunity, or a CG PUSCH transmission occasion. This is not limited.

It may be understood that, after obtaining the second configuration information, the terminal may periodically use the foregoing plurality of CG transmission occasions to perform uplink transmission.

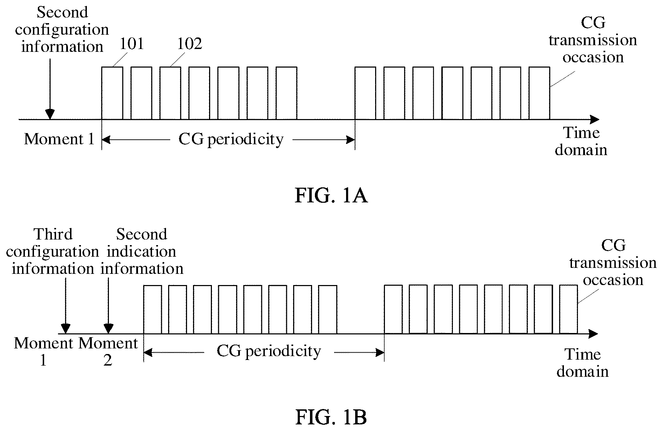

In an example, the CG resource configured and activated based on the second configuration information may be shown in FIG. 1A. FIG. 1A shows CG transmission occasions within two CG periods. In FIG. 1A, the RAN node sends the second configuration information to the terminal at moment 1. The second configuration information is used to configure the CG periodicity and seven CG transmission occasions within one CG period. After receiving the second configuration information, the terminal may send data to the RAN node within each CG period by using CG transmission occasions within the CG period.

Manner 2 specifically includes the following steps.

S3a: The RAN node outputs the third configuration information. Correspondingly, the terminal obtains the third configuration information.

A meaning of outputting the third configuration information by the RAN node is similar to a meaning of outputting the second configuration information by the RAN node. Refer to the foregoing descriptions of outputting the second configuration information by the RAN node. Details are not described herein again.

A meaning of obtaining the third configuration information by the terminal is similar to a meaning of obtaining the second configuration information by the terminal. Refer to the foregoing descriptions of obtaining the second configuration information by the terminal. Details are not described herein again.

The third configuration information is used to configure a CG resource. For example, the third configuration information includes information about a CG periodicity, information about a plurality of CG transmission occasions within one CG period.

In a possible design, the third configuration information is carried in an RRC message.

S3b: The RAN node outputs second indication information. Correspondingly, the terminal obtains the second indication information.

A meaning of outputting the second indication information by the RAN node is similar to a meaning of outputting the second configuration information by the RAN node. Refer to the foregoing descriptions of outputting the second configuration information by the RAN node. Details are not described herein again.

A meaning of obtaining the second indication information by the terminal is similar to a meaning of obtaining the second configuration information by the terminal. Refer to the foregoing descriptions of obtaining the second configuration information by the terminal. Details are not described herein again.

The second indication information indicates to activate the CG resource configured based on the third configuration information.

In a possible implementation, the second indication information is carried in downlink control information (downlink control information, DCI).

It may be understood that, after obtaining the third configuration information and the second indication information, the terminal may periodically use the plurality of CG transmission occasions that are configured based on the third configuration information, to perform uplink transmission.

In an example, the CG resource configured based on the third configuration information may be shown in FIG. 1B. FIG. 1B shows CG transmission occasions within two CG periods. In FIG. 1B, the RAN node sends the third configuration information to the terminal at moment 1, and sends the second indication information to the terminal at moment 2 after moment 1. The third configuration information is used to configure the CG periodicity and eight CG transmission occasions within one CG period. After receiving the third configuration information and the second indication information, the terminal may send data to the RAN node within each CG period by using CG transmission occasions within the CG period.

It may be understood from the foregoing descriptions that, in a CG manner, the RAN node may configure a periodically repeated CG resource for the terminal through one time of resource allocation. Therefore, sizes of data that can be carried by CG resources within different CG periods are the same. For example, in FIG. 1A, sizes of data that can be carried by first seven CG transmission opportunities are the same as sizes of data that can be carried by later seven CG transmission opportunities. Sizes of to-be-sent data within different CG periods may be different. For example, as described above when the cloud virtual reality and the cloud augmented reality are described, the sizes of the different video frames are usually variable, and due to the different compression ratios and frame types of the different video frames, the sizes of the different video frames differ greatly. As a result, a size of to-be-sent data within a CG period (for example, a CG period 1) is large, and a size of to-be-sent data within a CG period (for example, a CG period 2) is small. In this case, in the CG period 1, the to-be-sent data may occupy all CG transmission occasions within the period, and resources within the period are not wasted. However, within the CG period 2, the to-be-sent data may occupy some CG transmission occasions within the period, and a CG transmission occasion that is not occupied by the to-be-sent data within the period is not used for data transmission, and is wasted.

To save resources, it may be considered that the terminal reports a CG transmission occasion that is unused within a CG period to the RAN node, so that the RAN node reallocates the unused CG transmission occasion, for example, allocates, in a CS manner, the unused CG transmission occasion to another service of the terminal, or allocates the unused CG transmission occasion to another terminal. Specifically, the terminal may report, according to a predefined rule, a CG transmission occasion that is unused within the CG period to the RAN node; or the RAN node configures, for the terminal, a manner of reporting the CG transmission occasion that is unused within the CG period, and the terminal reports, based on the manner configured by the RAN node, the CG transmission occasion that is unused within the CG period to the RAN node.

For example, this application provides the following three information transmission methods. By using any one of the following three methods, a terminal may report, to a RAN node, a CG transmission occasion that is unused within a CG period, thereby saving resources.

Method 1: The terminal sends third indication information to the RAN node on each CG transmission occasion within a CG period. Correspondingly, the RAN node receives the third indication information on each CG transmission occasion within the CG period. The third indication information indicates a CG transmission occasion that is unused within the CG period. Optionally, the third indication information is carried in uplink control information (uplink control information, UCI).

It may be understood that, in the method 1, if there is to-be-sent data that needs to be sent by the terminal, the terminal reports, on each CG transmission occasion within the CG period, the CG transmission occasion that is unused within the CG period. In this way, although the RAN node can allocate the unused CG transmission occasion in a timely manner to save resources, repeated reporting for a plurality of times may occur. In addition, if the third indication information is carried in the UCI, it means that the UCI is multiplexed to a PUSCH for transmission. However, transmission reliability of the UCI is higher than transmission reliability of the PUSCH. Therefore, during channel coding, a code rate of the UCI is lower than a code rate of the PUSCH. Therefore, multiplexing the UCI on each CG transmission occasion within the CG period leads to a waste of resources. In addition, the RAN node needs to perform blind detection on the UCI, leading to increased complexity of the RAN node.

Method 2: The terminal sends fourth indication information to the RAN node on a 1st CG transmission occasion within a CG period. Correspondingly, the RAN node receives the fourth indication information on the 1st CG transmission occasion within the CG period. The fourth indication information indicates a CG transmission occasion that is unused within the CG period. Optionally, the fourth indication information is carried in UCI.

It may be understood that, in the method 2, if there is to-be-sent data that needs to be sent by the terminal, the terminal reports, on the 1st CG transmission occasion within the CG period, the CG transmission occasion that is unused within the CG period. In this way, the RAN node can allocate the unused CG transmission occasion in a timely manner to save resources, but inaccurate reporting may occur. For example, if not all to-be-sent data within one CG period arrives before the 1st CG transmission occasion within the CG period, the terminal cannot accurately determine the CG transmission occasion that is unused within the CG period. For example, one CG transmission occasion can be used for transmission of one data packet. For the CG resources shown in FIG. 1A, transmission of a maximum of seven data packets can be performed within one CG periodicity. If there are five data packets to be sent within a 1st CG period in FIG. 1A, where three data packets arrive before a CG transmission occasion 101, and the other two data packets arrive on a CG transmission occasion 102 in FIG. 1A, the terminal reports, on the CG transmission occasion 101, that a quantity of CG transmission occasions that are unused within the CG period is four. Actually, the quantity of CG transmission occasions that are unused within the CG period should be two. In addition, if the terminal reports, on the CG transmission occasion 101, that the quantity of CG transmission occasions that are unused within the CG period is four, last four CG transmission occasions within a CG periodicity are reallocated by the RAN node, and cannot be used for transmission of the other two data packets. This undoubtedly increases a transmission delay of the data packets.

Method 3: The terminal obtains first configuration information used to configure a reporting periodicity of first indication information, and sends the first indication information on at least one CG transmission occasion within the CG period based on the reporting periodicity. Correspondingly, the first indication information indicates a CG transmission occasion that is unused within the CG period or a CG transmission occasion that is used within the CG period. Optionally, the first indication information is carried in UCI.

It may be understood that, in the method 3, the terminal may report the CG transmission occasion that is unused within the CG period or the CG transmission occasion that is used within the CG period to the RAN node based on the obtained reporting periodicity, to flexibly determine an occasion for reporting the CG transmission occasion that is unused within the CG period or the CG transmission occasion that is used within the CG period, thereby saving resources. For example, the RAN node may allocate the unused CG transmission occasion to another service of the terminal or another terminal in a timely manner. In addition, in comparison with the method 1, the terminal does not need to report, on each CG transmission occasion within the CG period, the CG transmission occasion that is unused within the CG period, and repeated reporting for a plurality of times does not occur. If the first indication information is carried in the UCI, a quantity of UCI whose transmission is performed within the CG period can also be reduced, thereby reducing resources occupied by a code block corresponding to the UCI, and reducing complexity of the RAN node. In comparison with the method 2, the terminal does not fixedly report the CG transmission occasion that is unused within the CG period on the 1st CG transmission occasion within the CG period, so that a case in which the reported unused CG transmission occasion is inaccurate can be avoided, and a transmission delay of a data packet can be further reduced.

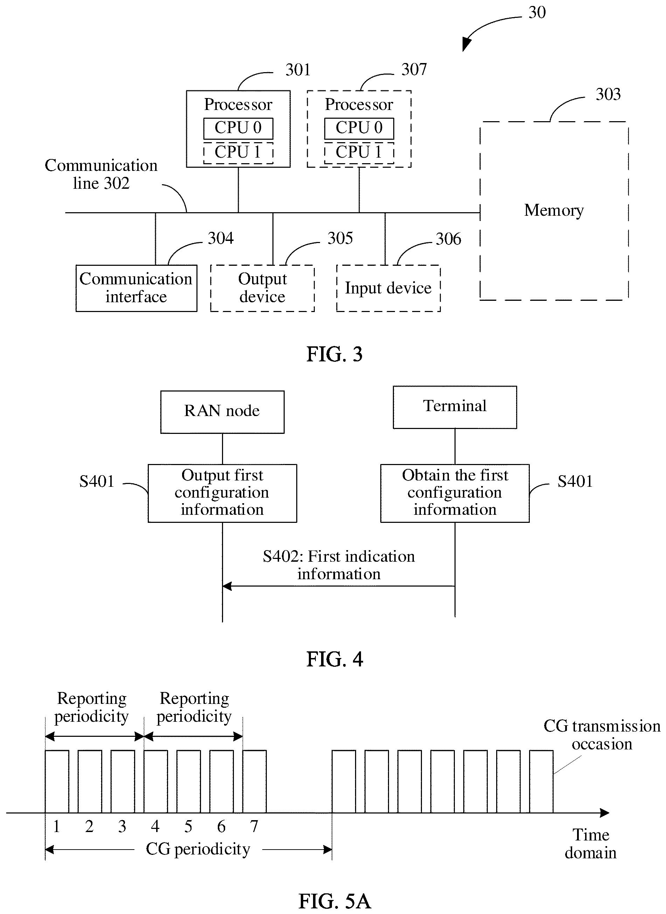

A specific process of the foregoing method 3 is described in the following method shown in FIG. 4, and details are not described herein.

The following describes implementations of this application in detail with reference to the accompanying drawings.

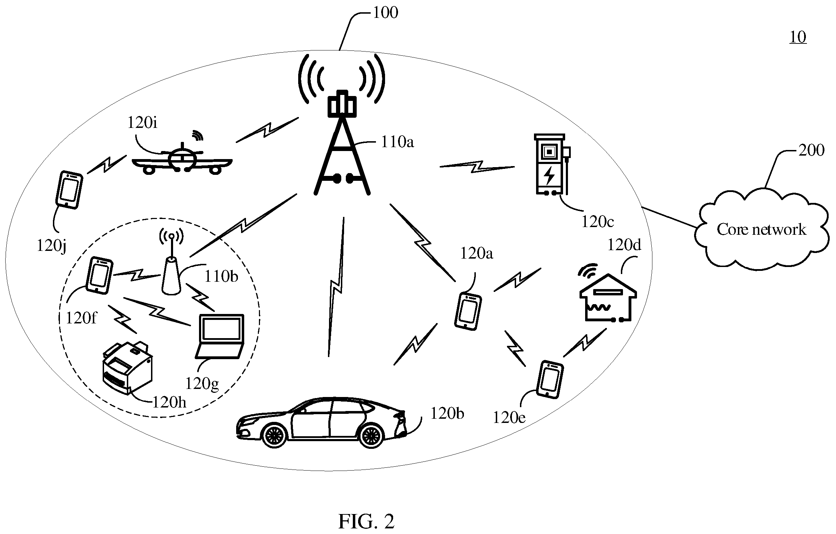

The methods provided in embodiments of this application may be used in various communication systems. The following uses a communication system 10 shown in FIG. 2 as an example to describe the methods provided in embodiments of this application. FIG. 2 is merely a diagram, and does not constitute a limitation on an applicable scenario of the technical solutions provided in this application.

FIG. 2 is a diagram of a possible and non-limitative system. As shown in FIG. 2, a communication system 10 includes a RAN 100 and a core network (core network, CN) 200. The RAN 100 includes at least one RAN node (for example, 110a and 110b in FIG. 2, which are collectively referred to as 110) and at least one terminal (for example, 120a to 120j in FIG. 2, which are collectively referred to as 120). The RAN 100 may further include another RAN node, for example, a wireless relay device and/or a wireless backhaul device (not shown in FIG. 2). The terminal 120 is connected to the RAN node 110 in a wireless manner. The RAN node 110 is connected to the core network 200 in a wireless or wired manner. A core network device in the core network 200 and the RAN node 110 in the RAN 100 may be different physical devices, or may be a same physical device that integrates a logical function of the core network and a logical function of the radio access network.

The RAN 100 may be a cellular system related to a 3rd generation partnership project (3rd generation partnership project, 3GPP), for example, a 4G or 5G mobile communication system, or a future-oriented evolved system (for example, a 6G mobile communication system). Alternatively, the RAN 100 may be an open radio access network (open RAN, O-RAN or ORAN), a cloud radio access network (cloud radio access network, CRAN), or a wireless fidelity (wireless fidelity, Wi-Fi) system. Alternatively, the RAN 100 may be a communication system that integrates the foregoing two or more systems.

Alternatively, the RAN node 110 may be sometimes referred to as an access network device, a RAN entity, an access node, or the like, and forms a part of a communication system, to help a terminal implement radio access. A plurality of RAN nodes 110 in the communication system 10 may be nodes of a same type, or may be nodes of different types. In some scenarios, roles of the RAN node 110 and the terminal 120 are relative. For example, a network element 120i in FIG. 2 may be a helicopter or an uncrewed aerial vehicle, and may be configured as a mobile base station. For the terminal 120j that accesses the RAN 100 through the network element 120i, the network element 120i is a base station. However, for the base station 110a, the network element 120i is a terminal. Both the RAN node 110 and the terminal 120 are sometimes referred to as communication apparatuses. For example, network elements 110a and 110b in FIG. 2 may be understood as communication apparatuses having a base station function, and network elements 120a to 120j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a Wi-Fi system, or the like. The RAN node may be a macro base station (for example, 110a in FIG. 2), a micro base station or an indoor station (for example, 110b in FIG. 2), a relay node or a donor node, or a radio controller in a CRAN scenario. Optionally, the RAN node may alternatively be a server, a wearable device, a vehicle, a vehicle-mounted device, or the like. For example, an access network device in a vehicle-to-everything (vehicle-to-everything, V2X) technology may be a roadside unit (roadside unit, RSU). All or some functions of the RAN node in this application may alternatively be implemented by using a software function running on hardware, or may be implemented by using an instantiated virtualization function on a platform (for example, a cloud platform). The RAN node in this application may alternatively be a logical node, a logical module, or software that can implement all or some functions of the RAN node.

In another possible scenario, a plurality of RAN nodes coordinate to assist the terminal in implementing radio access, and different RAN nodes separately implement some functions of the base station. For example, the RAN node may be a central unit (central unit, CU), a DU, a CU-control plane (control plane, CP), a CU-user plane (user plane, UP), or an RU. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have a different name, but a person skilled in the art may understand a meaning of the name. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as an example for description in this application. Any one of the CU (or the CU-CP or the CU-UP), the DU, and the RU in this application may be implemented by using a software module, a hardware module, or a combination of a software module and a hardware module.

The terminal may also be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IOT), virtual reality, augmented reality, industrial control, automatic driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A device form of the terminal is not limited in embodiments of this application.

The terminal may alternatively be a VR terminal, an AR terminal, or a mixed reality (mixed reality, MR) terminal. The VR terminal, the AR terminal, and the MR terminal may all be referred to as extended reality (extended reality, XR) terminals. The XR terminal may be, for example, a head-mounted device (for example, a helmet, a head-mounted display (head-mounted display, HMD), or glasses), may be an all-in-one device, or may be a television, a display, a car, a vehicle-mounted device, a tablet, or a smart screen. The XR terminal may access a network in a wireless or wired manner, for example, access the network through a Wi-Fi or 5G system. The XR terminal can present XR data to a user, and the user can experience diversified XR services by wearing or using the XR terminal.

The communication system 10 shown in FIG. 2 is merely used as an example, but is not intended to limit the technical solutions of this application. A person skilled in the art should understand that, in a specific implementation process, the communication system 10 may further include another device, and a quantity of RAN nodes and a quantity of terminals may alternatively be determined based on a specific requirement. This is not limited.

Optionally, each network element or device (for example, the RAN node or the terminal) in FIG. 2 in this application may also be referred to as a communication apparatus, and may be a general-purpose device or a dedicated device. This is not specifically limited in this application.

Optionally, related functions of each network element or device (for example, the RAN node or the terminal) in FIG. 2 in this application may be implemented by one device, or may be jointly implemented by a plurality of devices, or may be implemented by one or more functional modules in one device. This is not specifically limited in this application. It may be understood that, the foregoing function may be a network element in a hardware device, or may be a software function running on dedicated hardware, or a combination of hardware and software, or an instantiated virtualization function on a platform (for example, a cloud platform).

In a specific implementation, each network element or device (for example, the RAN node or the terminal) in FIG. 2 in this application may use a composition structure shown in FIG. 3, or include components shown in FIG. 3. FIG. 3 is a diagram of a hardware structure of a communication apparatus applicable to this application. The communication apparatus 30 includes at least one processor 301 and at least one communication interface 304, and is configured to implement the methods provided in this application. The communication apparatus 30 may further include a communication line 302 and a memory 303.

The processor 301 may be a general-purpose central processing unit (central processing unit, CPU), a microprocessor, an application-specific integrated circuit (application-specific integrated circuit, ASIC), or one or more integrated circuits configured to control program execution of the solutions of this application.

The communication line 302 may include a path, for example, a bus, for information transmission between the foregoing components.

The communication interface 304 is configured to communicate with another device or a communication network. The communication interface 304 may be any apparatus such as a transceiver, for example, may be an Ethernet interface, a radio access network (radio access network, RAN) interface, a wireless local area network (wireless local area network, WLAN) interface, a transceiver, a pin, a bus, or a transceiver circuit.

The memory 303 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected program code in a form of an instruction or a data structure and that can be accessible by a computer, but is not limited thereto. The memory may exist independently, and is coupled to the processor 301 through the communication line 302. Alternatively, the memory 303 may be integrated with the processor 301. The memory provided in this application may be usually non-volatile.

The memory 303 is configured to store computer-executable instructions for executing the solutions provided in this application, and the processor 301 controls execution. The processor 301 is configured to execute the computer-executable instructions stored in the memory 303, to implement the methods provided in this application. Alternatively, optionally, in this application, the processor 301 may perform functions related to processing in a method provided in the following embodiments of this application, and the communication interface 304 is responsible for communication with another device or a communication network. This is not specifically limited in this application.

Optionally, the computer-executable instructions in this application may also be referred to as application program code. This is not specifically limited in this application.

The coupling in this application may be an indirect coupling or a communication connection between apparatuses, units, or modules in an electrical form, a mechanical form, or another form, and is used for information exchange between the apparatuses, the units, or the modules.

In an embodiment, the processor 301 may include one or more CPUs, for example, a CPU 0 and a CPU 1 in FIG. 3.

In an embodiment, the communication apparatus 30 may include a plurality of processors, for example, the processor 301 and a processor 307 in FIG. 3. Each of the processors may be a single-core (single-CPU) processor, or may be a multi-core (multi-CPU) processor. The processor herein may be one or more devices, circuits, and/or processing cores configured to process data (for example, computer program instructions).

In an embodiment, the communication apparatus 30 may further include an output device 305 and/or an input device 306. The output device 305 is coupled to the processor 301, and may display information in a plurality of manners. For example, the output device 305 may be a liquid crystal display (liquid crystal display, LCD), a light emitting diode (light emitting diode, LED) display device, a cathode ray tube (cathode ray tube, CRT) display device, or a projector (projector). The input device 306 is coupled to the processor 301, and may receive a user input in a plurality of manners. For example, the input device 306 may be a mouse, a keyboard, a touchscreen device, or a sensor device.

It may be understood that the composition structure shown in FIG. 3 does not constitute a limitation on the communication apparatus. In addition to the components shown in FIG. 3, the communication apparatus may include more or fewer components than those shown in the figure, or combine some components, or have a different component arrangement.

The following describes the method provided in this application with reference to the accompanying drawings. Network elements in the following embodiments may have the components shown in FIG. 3, and details are not described again.

It may be understood that, names of messages between the network elements, names of parameters in the messages, or the like in the following embodiments of this application are merely examples, and there may be other names in a specific implementation. This is not specifically limited in this application.

It may be understood that, in this application, "/" may represent an "or" relationship between associated objects. For example, A/B may represent A or B. "And/or" may be used to describe three relationships existing between the associated objects. For example, "A and/or B" may represent the following three cases: Only A exists, both A and B exist, and only B exists, where A and B may be singular or plural. In addition, a representation similar to "at least one of A, B, and C" or "at least one of A, B, or C" is usually used to represent any one of the following: Only A exists; only B exists; only C exists; both A and B exist; both A and C exist; both B and C exist; and A, B, and C all exist. The foregoing uses a total of three elements A, B, and C as an example to describe an optional item of the project. When there are more elements in the representation, a meaning of the representation may be obtained according to the foregoing rules.

For ease of description of the technical solutions of this application, in this application, terms such as "first" and "second" may be used to distinguish between technical features with same or similar functions. The terms such as "first" and "second" do not limit a quantity and an execution sequence, and the terms such as "first" and "second" do not indicate a definite difference. In this application, a term like "example" or "for example" is used to represent an example, evidence, or a description. Any embodiment or design solution described as an "example" or "for example" should not be explained as being more preferred or having more advantages than another embodiment or design solution. The term such as "example" or "for example" is used to present a related concept in a specific manner for ease of understanding.

It may be understood that, "embodiment" mentioned throughout this specification means that particular features, structures, or characteristics related to this embodiment are included in at least one embodiment of this application. Therefore, embodiments in this entire specification do not necessarily refer to a same embodiment. In addition, these particular features, structures, or characteristics may be combined in one or more embodiments in any proper manner. It should be understood that sequence numbers of the processes do not mean execution sequences in various embodiments of this application. The execution sequences of the processes should be determined based on functions and internal logic of the processes, and should not be construed as any limitation on implementation processes of this application.

It may be understood that, in this application, "when" and "if" mean that corresponding processing is performed in an objective situation, are not intended to limit time, do not require a necessary determining action in an implementation, and do not mean any other limitation.

"Simultaneously" in this application may be understood as being at a same time point, may be understood as being within a time period, or may be understood as being within a same periodicity.

It may be understood that in some scenarios, some optional features in this application may be independently implemented without depending on another feature, for example, a solution on which the optional features are currently based, to resolve a corresponding technical problem and achieve corresponding effects. Alternatively, in some scenarios, the optional features may be combined with another feature based on a requirement. Correspondingly, the apparatus provided in this application may also correspondingly implement these features or functions. Details are not described herein.

It may be understood that, a same step or steps or technical features that have a same function in this application may be mutually referenced in different embodiments.

It may be understood that, in this application, a RAN node and/or a terminal may perform some or all steps in this application. These steps are merely examples. In this application, other steps or variations of various steps may alternatively be performed. In addition, the steps may be performed in a sequence different from a sequence presented in this application, and not all the steps in this application may be necessarily performed.

It may be understood that "sending information (for example, first configuration information) to the terminal" in this application may be understood as that a destination end of the information is the terminal, and may include directly or indirectly sending the information to the terminal. "Receiving information (for example, first indication information) from the terminal" may be understood as that a source end of the information is the terminal, and may include directly or indirectly receiving the information from the terminal. Information may undergo necessary processing between the source end for sending the information and the destination end, for example, a format change. However, the destination end may understand valid information from the source end. Similar descriptions in this application may be understood similarly, and details are not described herein again.

It may be understood that "sending information (for example, first indication information) to the RAN node" in this application may be understood as that a destination end of the information is the RAN node, and may include directly or indirectly sending the information to the RAN node. "Receiving information (for example, first configuration information) from the RAN node" may be understood as that a source end of the information is the RAN node, and may include directly or indirectly receiving the information from the RAN node. Information may undergo necessary processing between the source end for sending the information and the destination end, for example, a format change. However, the destination end may understand valid information from the source end. Similar descriptions in this application may be understood similarly, and details are not described herein again.

It may be understood that, in the method provided below in this application, the method is illustrated by using an example in which the RAN node and the terminal are used as execution bodies of interaction illustration. However, the execution bodies of the interaction illustration are not limited in this application. For example, the RAN node in the method provided in this application may be a chip, a chip system, or a processor that supports the RAN node in implementing the method, or may be a logical node, a logical module, or software that can implement all or some functions of the RAN node. Alternatively, the terminal in the method provided in this application may be a chip, a chip system, or a processor that supports the terminal in implementing the method, or may be a logical node, a logical module, or software that can implement all or some functions of the terminal.

FIG. 4 shows an information transmission method according to this application. The method may include the following steps.

S401: A RAN node outputs first configuration information. Correspondingly, a terminal obtains the first configuration information.

The RAN node may be the RAN node 110, and the terminal may be the terminal 120.

In this application, that the RAN node outputs the first configuration information may be understood as that the RAN node sends the first configuration information to another apparatus. For example, the RAN node sends the first configuration information to the terminal. Alternatively, that the RAN node outputs the first configuration information may be understood as that a RAN node implementing some functions of a base station outputs the first configuration information to another RAN node implementing some functions of the base station. For example, a DU outputs the first configuration information to an RU.

In this application, that the terminal obtains the first configuration information may be understood as that the terminal receives the first configuration information from another apparatus. For example, the terminal receives the first configuration information from the RAN node. Alternatively, that the terminal obtains the first configuration information may be understood as that a module of the terminal obtains the first configuration information from another module of the terminal. For example, a baseband processing module of the terminal may restore a baseband signal from a radio frequency module, and then decode the baseband signal to obtain the first configuration information.

In this application, the first configuration information may be used to configure a reporting periodicity of first indication information. In this way, the terminal may report the first indication information based on the reporting periodicity configured by the RAN node. Optionally, the first configuration information is carried in an RRC message. It may be understood that the first configuration information may not be used to configure the reporting periodicity. For example, the reporting periodicity is preset or pre-specified.

In this application, the first indication information may indicate a CG transmission occasion that is unused within a CG period or a CG transmission occasion that is used within a CG period. The CG transmission occasion that is unused within the CG period may be understood as that the terminal does not send data or a PUSCH on the CG transmission occasion. The CG transmission occasion that is used within the CG period may be understood as that the terminal sends data or a PUSCH on the CG transmission occasion.

It may be understood that, after the terminal reports the first indication information based on the reporting periodicity configured by the RAN node, the RAN node may determine, based on the first indication information, the CG transmission occasion that is unused within the CG period, and reallocate the unused CG transmission, thereby saving resources.

Optionally, the first indication information is carried in UCI. In other words, the UCI may be multiplexed on the CG transmission occasion within the CG period.

It may be understood that the reporting periodicity of the first indication information is less than a CG periodicity, or the reporting periodicity of the first indication information is less than or equal to the CG periodicity. In this way, the terminal may report the first indication information at least once within each CG period.

It may be understood that the RAN node may configure the reporting periodicity based on a value of the reporting periodicity of the first indication information. For example, the first configuration information includes the value of the reporting periodicity.

In a possible design, the first configuration information includes N+1, that is, the reporting periodicity of the first indication information configured by the RAN node is N+1; or the first configuration information includes N, that is, the reporting periodicity of the first indication information configured by the RAN node is N. N represents a quantity of CG transmission occasions between two adjacent CG transmission occasions on which the first indication information is carried within the CG period, and N is an integer greater than or equal to 0. It may be understood that N is less than a quantity of CG transmission occasions within the CG period.

In an example, if the CG period includes seven CG transmission occasions, and N is equal to 2, the first configuration information includes 2 or 3, and a reporting periodicity of the first indication information may be shown in FIG. 5A. Within a 1st CG periodicity in FIG. 5A, the terminal may report the first indication information on a CG transmission occasion 1, a CG transmission occasion 4, and a CG transmission occasion 7. There are two CG transmission occasions between the CG transmission occasion 4 and the CG transmission occasion 1, and there are two CG transmission occasions between the CG transmission occasion 7 and the CG transmission occasion 4.

In another possible design, the first configuration information includes T, that is, the reporting periodicity of the first indication information configured by the RAN node is T. T represents a time difference between two adjacent CG transmission occasions on which the first indication information is carried within the CG period. Optionally, T is in a unit of slot (slot), ms, or the like, and T is greater than or equal to 0.

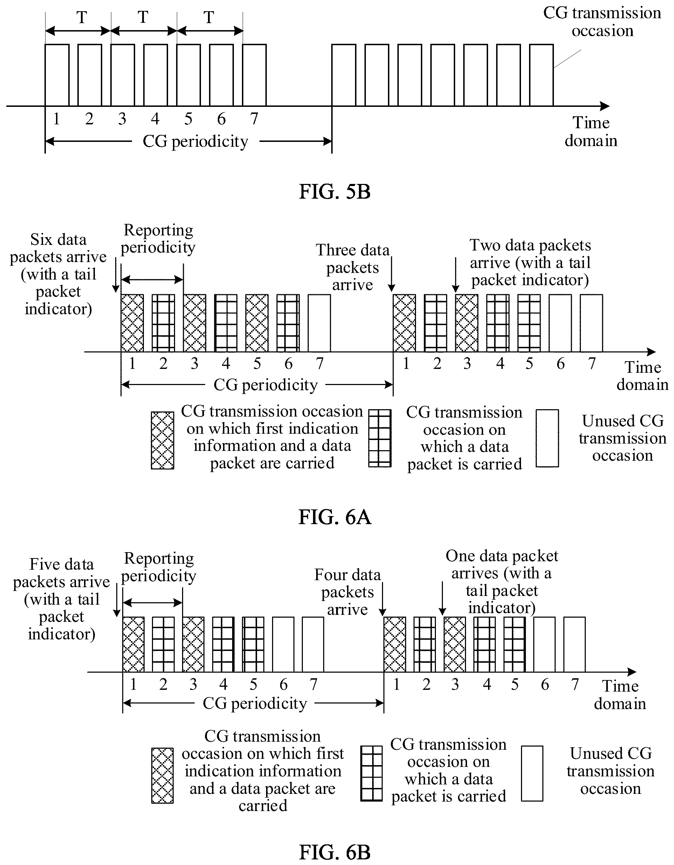

In an example, if the CG period includes seven CG transmission occasions, and the first configuration information includes T, a reporting periodicity of the first indication information may be shown in FIG. 5B. Within a 1st CG periodicity in FIG. 5B, the terminal may report the first indication information on a CG transmission occasion 1, a CG transmission occasion 3, a CG transmission occasion 5, and a CG transmission occasion 7. A time difference between the CG transmission occasion 3 and the CG transmission occasion 1 is T, a time difference between the CG transmission occasion 5 and the CG transmission occasion 3 is T, and a time difference between the CG transmission occasion 7 and the CG transmission occasion 5 is T.

In this application, a time difference between any two CG transmission occasions (for example, a time difference between two adjacent CG transmission occasions on which the first indication information is carried within the CG period) may be understood as a time difference between a start time domain position of one CG transmission occasion and a start time domain position of another CG transmission occasion, or a time difference between an end time domain position of one CG transmission occasion and an end time domain position of another CG transmission occasion. Centralized descriptions are provided herein, and details are not described below.

In FIG. 5A, a time length of a $1^{st}$ reporting periodicity (for example, a time difference between a start time domain position of the CG transmission occasion 4 and a start time domain position of the CG transmission occasion 1) is the same as a time length of a $2^{nd}$ reporting periodicity (for example, a time difference between a start time domain position of the CG transmission occasion 7 and a start time domain position of the CG transmission occasion 4). However, in a specific application, within one CG period, another uplink/downlink resource may be further included between two adjacent CG transmission occasions. If the two adjacent CG transmission occasions are considered as one CG transmission occasion group, quantities and sizes of uplink/downlink resources included between two CG transmission occasions in different CG transmission occasion groups may be different. Therefore, time differences between the two CG transmission occasions in the different CG transmission occasion groups may be different. To be specific, in a specific application, a time difference between the CG transmission occasion 2 and the CG transmission occasion 1 in FIG. 5A may be different from a time difference between the CG transmission occasion 5 and the CG transmission occasion 4, a time difference between the CG transmission occasion 3 and the CG transmission occasion 2 may be different from a time difference between the CG transmission occasion 6 and the CG transmission occasion 5, and a time difference between the CG transmission occasion 4 and the CG transmission occasion 3 may be different from a time difference between the CG transmission occasion 7 and the CG transmission occasion 6. Therefore, in a specific application, the time length of the $1^{st}$ reporting periodicity in FIG. 5A may be different from the time length of the $2^{nd}$ reporting periodicity. It may be understood that, based on a similar reason, in a specific application, a quantity of CG transmission occasions included in a $1^{st}$ T, a quantity of CG transmission occasions included in a $2^{nd}$ T, and a quantity of CG transmission occasions included in a $3^{rd}$ T in FIG. 5B may be the same or may be different.

Optionally, the first configuration information is further used to configure a $1^{st}$ CG transmission occasion on which the first indication information is carried within the CG period. In this way, the terminal may determine a start CG transmission occasion on which the first indication information is carried within a CG periodicity. It may be understood that, the first configuration information may not be used to configure the $1^{st}$ CG transmission occasion on which the first indication information is carried within the CG period, and the CG transmission occasion is preset or pre-specified.

In a possible design, the RAN node configures the CG transmission occasion based on an index of the $1^{st}$ CG transmission occasion on which the first indication information is carried within the CG period. The index may indicate which CG transmission occasion within the CG period is the $1^{st}$ CG transmission occasion on which the first indication information is carried.

For example, the reporting periodicity of the first indication information shown in FIG. 5A is used as an example. If the first configuration information includes 1, it indicates that the $1^{st}$ CG transmission occasion on which the first indication information is carried within the CG period is the CG transmission occasion 1. Within the $1^{st}$ CG periodicity in FIG. 5A, the terminal may report the first indication information on the CG transmission occasion 1, the CG transmission occasion 4, and the CG transmission occasion 7.

For example, the reporting periodicity of the first indication information shown in FIG. 5B is used as an example, and it is assumed that in FIG. 5B, the quantity of CG transmission occasions included in the $1^{st}$ T, the quantity of CG transmission occasions included in the $2^{nd}$ T, and the quantity of CG transmission occasions included in the $3^{rd}$ T are the same. If the first configuration information includes 2, it indicates that the $1^{st}$ CG transmission occasion on which the first indication information is carried within the CG period is the CG transmission occasion 2. Within the $1^{st}$ CG periodicity in FIG. 5B, the terminal may report the first indication information on the CG transmission occasion 2, the CG transmission occasion 4, and the CG transmission occasion 6.

Optionally, the first configuration information is further used to configure a first threshold. The first threshold is a minimum interval between a CG transmission occasion on which the first indication information is carried within the CG period and a CG transmission occasion that is unused within the CG period. To be specific, an interval between the CG transmission occasion on which the first indication information is carried within the CG period and the CG transmission occasion that is unused within the CG period is greater than the first threshold, or an interval between the CG transmission occasion on which the first indication information is carried within the CG period and the CG transmission occasion within the CG period is greater than or equal to the first threshold. In this way, time may be reserved for the RAN node to reallocate the CG transmission occasion that is unused within the CG period. It may be understood that the first configuration information may not be used to configure the first threshold, and the first threshold is preset or pre-specified.

In an example, the first threshold is a time difference between a $1^{st}$ CG transmission occasion that is unused within the CG period and a CG transmission occasion on which the first indication information is carried within the CG period. Alternatively, the first threshold is a quantity of CG transmission occasions between the 1st CG transmission occasion that is unused within the CG period and the CG transmission occasion on which the first indication information is carried within the CG period.

It may be understood that the RAN node may further configure a CG transmission occasion within the CG period.

In an example, the RAN node may configure the CG transmission occasion within the CG period by using S3.1 or S3a and S3b.

In another example, in S401, the first configuration information is used not only to configure the reporting periodicity of the first indication information, but also to configure the CG transmission occasion within the CG period.

S402: The terminal sends the first indication information to the RAN node on at least one CG transmission occasion within the CG period based on the reporting periodicity of the first indication information. Correspondingly, the RAN node receives the first indication information from the terminal on the at least one CG transmission occasion within the CG period based on the reporting periodicity of the first indication information.

It may be understood that the at least one CG transmission occasion in S402 is determined by the terminal based on the first configuration information. The at least one CG transmission occasion determined by the terminal varies with content configured based on the first configuration information.

In a possible implementation, if the first configuration information is used to configure the reporting periodicity of the first indication information, the at least one CG transmission occasion includes a CG transmission occasion determined within the CG period based on the reporting periodicity.

In an example, if the CG period includes seven CG transmission occasions, and the reporting periodicity N of the first indication information, configured based on the first configuration information, is equal to 2, the reporting periodicity of the first indication information may be shown in FIG. 5A. Within the 1st CG periodicity in FIG. 5A, the at least one CG transmission occasion includes the CG transmission occasion 1, the CG transmission occasion 4, and the CG transmission occasion 7.

In a possible implementation, if the first configuration information is used to configure the reporting periodicity of the first indication information and the 1st CG transmission occasion on which the first indication information is carried within the CG period, the at least one CG transmission occasion includes a CG transmission occasion that is in CG transmission occasions having a periodicity of N and starting from the 1st CG transmission occasion on which the first indication information is carried within the CG period.

In an example, if the CG period includes seven CG transmission occasions, the reporting periodicity N of the first indication information, configured based on the first configuration information, is equal to 2, and the 1st CG transmission occasion on which the first indication information is carried within the CG period is the CG transmission occasion 2, the reporting periodicity of the first indication information may be shown in FIG. 5A. Within the 1st CG periodicity in FIG. 5A, the at least one CG transmission occasion includes the CG transmission occasion 2 and the CG transmission occasion 5. The CG transmission occasion 2 is a start CG transmission occasion on which the first indication information is carried within the CG period configured based on the first configuration information, and the CG transmission occasion 5 is determined based on N.

In a possible implementation, if the first configuration information is used to configure the reporting periodicity of the first indication information and the first threshold, the at least one CG transmission occasion includes a CG transmission occasion that is in CG transmission occasions determined based on the reporting periodicity within the CG period and that has an interval, greater than or equal to the first threshold, from the CG transmission occasion unused within the CG period.

In an example, if the CG period includes seven CG transmission occasions, the reporting periodicity N of the first indication information, configured based on the first configuration information, is equal to 2, and the first threshold is equal to 2 (that is, two CG transmission occasions), the reporting periodicity of the first indication information may be shown in FIG. 5A. When the first threshold is not considered, the at least one CG transmission occasion includes the CG transmission occasion 1, the CG transmission occasion 4, and the CG transmission occasion 7. When the first threshold is considered, if the CG transmission occasion that is unused within the CG period is the CG transmission occasion 7, because an interval between the CG transmission occasion 7 and the CG transmission occasion 1 is greater than the first threshold, an interval between the CG transmission occasion 7 and the CG transmission occasion 4 is equal to the first threshold, and no data transmission is performed on the CG transmission occasion 7, the at least one CG transmission occasion includes the CG transmission occasion 1 and the CG transmission occasion 4.

In a possible implementation, if the first configuration information is used to configure the reporting periodicity of the first indication information, the 1st CG transmission occasion on which the first indication information is carried within the CG period, and the first threshold, the at least one CG transmission occasion includes a CG transmission occasion that is in CG transmission occasions having a periodicity of N and starting from the 1st CG transmission occasion on which the first indication information is carried within the CG period and that has an interval, greater than or equal to the first threshold, from the CG transmission occasion unused within the CG period.

In another example, if the CG period includes seven CG transmission occasions, the reporting periodicity N of the first indication information, configured based on the first configuration information, is equal to 2, the 1st CG transmission occasion on which the first indication information is carried within the CG period is the CG transmission occasion 2, and the first threshold is equal to 2 (that is, two CG transmission occasions), the reporting periodicity of the first indication information may be shown in FIG. 5A. When the first threshold is not considered, the at least one CG transmission occasion includes the CG transmission occasion 2 and the CG transmission occasion 5. When the first threshold is considered, if CG transmission occasions that are unused within the CG period is the CG transmission occasion 6 and the CG transmission occasion 7, because an interval between the CG transmission occasion 6 and the CG transmission occasion 2 is greater than the first threshold, and an interval between the CG transmission occasion 6 and the CG transmission occasion 5 is less than the first threshold, the at least one CG transmission occasion includes the CG transmission occasion 2.

The actions of the RAN node or the terminal in S401 and S402 may be performed by the processor 301 in the communication apparatus 30 shown in FIG. 3 by invoking the application program code stored in the memory 303. This is not limited in this application.

According to the method shown in FIG. 4, the RAN node may configure the reporting periodicity of the first indication information for the terminal, and the terminal may report the first indication information based on the reporting periodicity. In this way, the RAN node may determine, based on the first indication information, the CG transmission occasion that is unused within the CG period, thereby saving resources. For example, the RAN node may reallocate the unused CG transmission occasion, for example, allocate, in a CS manner, the unused CG transmission occasion to another service of the terminal, or allocate the unused CG transmission occasion to another terminal other than this terminal. In addition, in comparison with the foregoing method 1, the terminal does not need to report, on each CG transmission occasion within the CG period, the CG transmission occasion that is unused within the CG period, and repeated reporting for a plurality of times does not occur. If the first indication information is carried in the UCI, a quantity of UCI whose transmission is performed within the CG period can also be reduced, thereby reducing resources occupied by a code block corresponding to the UCI, and reducing complexity of the RAN node. In comparison with the foregoing method 2, the terminal does not fixedly report the CG transmission occasion that is unused within the CG period on the 1st CG transmission occasion within the CG period, so that a case in which the reported unused CG transmission occasion is inaccurate can be avoided, and a transmission delay of a data packet can be further reduced.

Optionally, the terminal may determine a quantity of CG transmission occasions that are unused within the CG period or a quantity of CG transmission occasions that are used within the CG period, and determine, based on the quantity, a CG transmission occasion that is unused within the CG period or a CG transmission occasion that is used within the CG period.

In a possible implementation, the terminal may determine the quantity of CG transmission occasions that are unused within the CG period or the quantity of CG transmission occasions that are used within the CG period in either of the following two manners.

Manner A: The quantity of CG transmission occasions that are unused within the CG period or the quantity of CG transmission occasions that are used within the CG period is related to a buffer state of the terminal.

In an example, the quantity of CG transmission occasions that are unused within the CG period satisfies the following formula: $R_1 = R - ceil[W/S]$. $R_1$ represents the quantity of CG transmission occasions that are unused within the CG period, $R$ represents the quantity of remaining available CG transmission occasions within the CG period or the quantity of CG transmission occasions that are not used within the CG period, W represents a buffer state value (buffer state value) of the terminal, S represents an amount of data whose transmission can be performed on the CG transmission occasions, and *ceil*[] represents rounding up. The quantity $R_2$ of CG transmission occasions that are used within the CG period satisfies the following formula:

$$R_2 = ceil[W/S].$$

Manner B: The quantity of CG transmission occasions that are unused within the CG period or the quantity of CG transmission occasions that are used within the CG period is related to a size of to-be-sent data (for example, a size of a protocol data unit (protocol data unit, PDU) set (PDU set) or a size of a video frame) within the CG period.

In an example, the quantity of CG transmission occasions that are unused within the CG period satisfies the following formula: $R_1 = P - ceil[Q/S]$. $R_1$ represents the quantity of CG transmission occasions that are unused within the CG period, P represents a quantity of CG transmission occasions within the CG period, $Q$ represents a size of to-be-sent data within the CG period, and S represents an amount of data whose transmission can be performed on the CG transmission occasions. The quantity $R_2$ of CG transmission occasions that are used within the CG period satisfies the following formula:

$$R_2 = ceil[Q/S].$$

It may be understood that, after determining the quantity of CG transmission occasions that are unused within the CG period or the quantity of CG transmission occasions that are used within the CG period, the terminal may determine which CG transmission occasion within the CG period is an unused CG transmission occasion and which CG transmission occasion within the CG period is a used CG transmission occasion.

For example, if the terminal determines that the quantity of CG transmission occasions that are unused within the CG period is $R_1$, the terminal may determine that last $R_1$ CG transmission occasions within the CG period are unused CG transmission occasions, and a CG transmission occasion preceding the $R_1$ CG transmission occasions within the CG period is a used CG transmission occasion. For example, if the CG period includes eight CG transmission occasions, and $R_1$ is equal to 3, the terminal determines that last three CG transmission occasions within the CG period are unused CG transmission occasions, and first five CG transmission occasions within the CG period are used CG transmission occasions.

For example, if the terminal determines that the quantity of CG transmission occasions that are used within the CG period is $R_2$, the terminal may determine that first $R_2$ CG transmission occasions within the CG period are used CG transmission occasions, and that a CG transmission occasion following the $R_2$ CG transmission occasions within the CG period is an unused CG transmission occasion. For example, if the CG period includes eight CG transmission occasions, and $R_2$ is equal to 4, the terminal determines that first four CG transmission occasions within the CG period are used CG transmission occasions, and last four CG transmission occasions within the CG period are unused CG transmission occasions.

Optionally, in a possible implementation of the method shown in FIG. 4, the terminal may indicate, based on the quantity of CG transmission occasions that are unused within the CG period, the CG transmission occasions that are unused within the CG period. For example, the first indication information includes the quantity $R_1$ of CG transmission occasions that are unused within the CG period. In this way, the RAN node may determine, based on the first indication information, that the last $R_1$ CG transmission occasions within the CG period are unused.

Optionally, when the terminal indicates, based on the quantity of CG transmission occasions that are unused within the CG period, the CG transmission occasions that are unused within the CG period, within the CG period, a quantity of unused CG transmission occasions indicated by the first indication information sent earlier is less than a quantity of unused CG transmission occasions indicated by the first indication information sent later; or a quantity of unused CG transmission occasions indicated by the first indication information sent earlier is less than or equal to a quantity of unused CG transmission occasions indicated by the first indication information sent later. In this way, it can be avoided that, after the RAN node reallocates the unused CG transmission occasions, the terminal indicates that these CG transmission occasions are to be used, leading to related interference between terminals.

For example, the at least one CG transmission occasion includes a first CG transmission occasion and a second CG transmission occasion, and the first CG transmission occasion precedes the second CG transmission occasion. If the quantity of unused CG transmission occasions indicated by the first indication information carried on the first CG transmission occasion is M1, and the quantity of unused CG transmission occasions indicated by the first indication information carried on the second CG transmission occasion is M2, M1 is less than M2, or M1 is less than or equal to M2.

Optionally, in a possible implementation of the method shown in FIG. 4, the terminal may indicate, based on the quantity of CG transmission occasions that are used within the CG period, CG transmission occasions that are unused within the CG period. For example, the first indication information includes the quantity $R_2$ of CG transmission occasions that are used within the CG period. In this way, the RAN node may determine, based on the first indication information, that last $(P - R_2)$ CG transmission occasions within the CG period are unused.

Optionally, when the terminal indicates, based on the quantity of CG transmission occasions that are used within the CG period, CG transmission occasions that are unused within the CG period, within the CG period, a quantity of used CG transmission occasions indicated by the first indication information sent earlier is greater than a quantity of used CG transmission occasions indicated by the first indication information sent later; or a quantity of used CG transmission occasions indicated by the first indication information sent earlier is greater than or equal to a quantity of used CG transmission occasions indicated by the first indication information sent later. In this way, it can be avoided that, after the RAN node reallocates the unused CG transmission occasions, the terminal indicates that these CG transmission occasions are to be used, leading to related interference between terminals.

For example, the at least one CG transmission occasion includes a first CG transmission occasion and a second CG transmission occasion, and the first CG transmission occasion precedes the second CG transmission occasion. If the quantity of used CG transmission occasions indicated by the first indication information carried on the first CG transmission occasion is M3, and the quantity of used CG transmission occasions indicated by the first indication information carried on the second CG transmission occasion is M4, M3 is greater than M4, or M3 is greater than or equal to M4.

Optionally, in a possible implementation of the method shown in FIG. 4, a CG transmission occasion that is unused within the CG period or a CG transmission occasion that is used within the CG period indicated by the first indication information is related to the first interval. The first interval is an interval between a CG transmission occasion that is unused within the CG period and a CG transmission occasion on which the first indication information (for example, a quantity of CG transmission occasions or a time difference between the CG transmission occasion that is unused within the CG period and the CG transmission occasion on which the first indication information is carried) is carried, or the first interval is an interval between a CG transmission occasion that is used within the CG period and a CG transmission occasion on which the first indication information (for example, a quantity of CG transmission occasions or a time difference between the CG transmission occasion that is used within the CG period and the CG transmission occasion on which the first indication information is carried) is carried. It may be understood that the time difference is in a unit of slot or ms.

For example, if the at least one CG transmission occasion includes a third CG transmission occasion, the first indication information carried on the third CG transmission occasion may indicate whether a fourth CG transmission occasion following the third CG transmission occasion is used. To be specific, the first indication information carried on the third CG transmission occasion may indicate that a CG transmission occasion that is unused within the CG period includes the fourth transmission occasion, or the first indication information carried on the third CG transmission occasion may indicate that a CG transmission occasion that is used within the CG period includes the fourth transmission occasion. There is the first interval between the third CG transmission occasion and the fourth CG transmission occasion.

In an example, the first indication information carried on the third CG transmission occasion includes one bit. If a value of the one bit is "0", it indicates that the first indication information indicates that the fourth CG transmission occasion is unused; if the value of the one bit is "1", it indicates that the first indication information indicates that the fourth CG transmission occasion is used; and vice versa.

In the foregoing example, regardless of whether the fourth CG transmission occasion is used, the terminal sends the first indication information on the third CG transmission occasion. In a specific application, the terminal may alternatively send the first indication information on the third CG transmission occasion when determining that the fourth CG transmission occasion is unused, and does not send the first indication information on the third CG transmission occasion when determining that the fourth CG transmission occasion is used. This is not limited.

Optionally, the CG transmission occasions that are unused within the CG period further include a CG transmission occasion following the fourth CG transmission occasion within the CG period. In other words, the CG transmission occasion following the fourth CG transmission occasion within the CG period is unused.

It may be understood that, if a CG transmission occasion that is unused within the CG period or a CG transmission occasion that is used within the CG period indicated by the first indication information is related to the first interval, the first configuration information is further used to configure the first interval.

It may be understood that the first configuration information may not be used to configure the first interval, and the first interval is preset or pre-specified.

For better understanding of the method provided in this application, a specific process of the information transmission method provided in this application is described below with reference to FIG. 6A and FIG. 6B. In the following examples, it is assumed that one CG transmission occasion can be used for transmission of one data packet.

Refer to FIG. 6A. A RAN node configures seven CG transmission periodicities within a CG periodicity for a terminal based on first configuration information (FIG. 6A shows CG transmission occasions within two CG periodicities), a reporting periodicity N of first indication information is equal to 1, and a first threshold is one CG transmission occasion. The following describes reporting of the first indication information within a 1st CG periodicity and a 2nd CG periodicity separately.

If the terminal receives six data packets before a CG transmission occasion 1 within the 1st CG periodicity, and receives a tail packet indicator (where the tail packet indicator is carried in a last data packet and indicates that the data packet is the last data packet), the terminal determines, based on the foregoing manner A or manner B, that a quantity of CG transmission occasions that are unused within a 1st CG periodicity is 1, that is, the unused CG transmission occasion is a CG transmission occasion 7. The terminal sends the data packets on the CG transmission occasion 1 to a CG transmission occasion 6 within the 1st CG period. Because the first configuration information is used to configure that the first indication information is reported once every other CG transmission occasion, the CG transmission occasion 7 is unused, an interval between the CG transmission occasion 7 and the CG transmission occasion 1 is greater than the first threshold, an interval between the CG transmission occasion 7 and a CG transmission occasion 3 is greater than the first threshold, and an interval between the CG transmission occasion 7 and a CG transmission occasion 5 is equal to the first threshold, the terminal reports the first indication information on the CG transmission occasion 1, the CG transmission occasion 3, and the CG transmission occasion 5. The first indication information indicates that the quantity of CG transmission occasions that are unused within the CG period is 1. After receiving the first indication information, the RAN node determines that the CG transmission occasion 7 within the 1st CG period is unused.

The terminal receives three data packets before the CG transmission occasion 1 within the 2nd CG periodicity, but does not receive the tail packet indicator. In other words, the terminal has not received the last data packet, and the terminal receives two data packets and receives the tail packet indicator on the CG transmission occasion 3. Therefore, the terminal sends the data packets on the CG transmission occasion 1 to the CG transmission occasion 5. If it is not specified that within the CG period, a quantity of unused CG transmission occasions indicated by the first indication information sent earlier is less than or equal to a quantity of unused CG transmission occasions indicated by the first indication information sent later, the terminal determines, on the CG transmission occasion 1 within the 2nd CG periodicity, that the quantity of CG transmission occasions that are unused within a 2nd CG period is 4. Therefore, the terminal reports the first indication information on the CG transmission occasion 1, and the first indication information indicates that the quantity of unused CG transmission occasions is 4. The RAN node may determine, based on the first indication information, that a CG transmission occasion 4 to the CG transmission occasion 7 are unused. The terminal determines, on the CG transmission occasion 3 within the 2nd CG periodicity based on the foregoing manner A or manner B, that the quantity of CG transmission occasions that are unused within the 2nd CG period is 2. Therefore, the terminal reports the first indication information on the CG transmission occasion 3, and the first indication information indicates that the quantity of CG transmission occasions that are unused is 2. The RAN node may determine, based on the first indication information, that the CG transmission occasion 6 and the CG transmission occasion 7 are unused. It may be understood that, if the RAN node has reallocated the CG transmission occasion 4 and the CG transmission occasion 5, the terminal cannot send the data packets on the CG transmission occasion 4 and the CG transmission occasion 5. Within the 2nd CG periodicity, an interval between the CG transmission occasion 6 and the CG transmission occasion 5 is less than the first threshold. Therefore, the terminal does not report the first indication information on the CG transmission occasion 5. If it is specified that within the CG period, a quantity of unused CG transmission occasions indicated by the first indication information sent earlier is less than or equal to a quantity of unused CG transmission occasions indicated by the first indication information sent later, the terminal does not receive a tail packet indicator on the CG transmission occasion 1 within the 2nd CG periodicity, and cannot determine the quantity of CG transmission occasions that are actually unused within the 2nd CG period. Therefore, the terminal reports the first indication information on the CG transmission occasion 1, and the first indication information indicates that the quantity of unused CG transmission occasions is 0. The RAN node may determine, based on the first indication information, that there is no unused CG transmission occasion within the 2nd CG period. The terminal determines, on the CG transmission occasion 3 within the 2nd CG periodicity based on the foregoing manner A or manner B, that the quantity of CG transmission occasions that are unused within the 2nd CG period is 2. Therefore, the terminal reports the first indication information on the CG transmission occasion 3, and the first indication information indicates that the quantity of CG transmission occasions that are unused is 2. The RAN node may determine, based on the first indication information, that the CG transmission occasion 6 and the CG transmission occasion 7 are unused. Within the 2nd CG periodicity, an interval between the CG transmission occasion 6 and the CG transmission occasion 5 is less than the first threshold. Therefore, the terminal does not report the first indication information on the CG transmission occasion 5.

Refer to FIG. 6B. A RAN node configures seven CG transmission periodicities within a CG periodicity for a terminal based on first configuration information (FIG. 6B shows CG transmission occasions within two CG periodicities). A reporting periodicity N of first indication information is equal to 1, and a first interval between a CG transmission occasion that is unused within a CG period and a CG transmission occasion on which the first indication information is carried is two CG transmission occasions. The following describes reporting of the first indication information within a 1st CG periodicity and a 2nd CG periodicity separately.

If the terminal receives five data packets before a CG transmission occasion 1 within the 1st CG periodicity and receives a tail packet indicator, the terminal determines, based on the foregoing manner A or manner B, that a quantity of unused CG transmission occasions within a 1st CG period is 2, that is, the unused CG transmission occasions are a CG transmission occasion 6 and a CG transmission occasion 7. The terminal sends the data packets on the CG transmission occasion 1 to a CG transmission occasion 5 within the 1st CG period. Because the first configuration information is used to configure that the first indication information is reported once every other CG transmission occasion, the first configuration information is further used to configure that an interval between a CG transmission occasion that is unused within the CG period and a CG transmission occasion on which the first indication information is carried is two CG transmission occasions, and the CG transmission occasion 6 and the CG transmission occasion 7 are unused, the terminal reports the first indication information on the CG transmission occasion 1, and the first indication information indicates that the CG transmission occasion 4 is used. After receiving the first indication information, the RAN node determines that the terminal needs to use the CG transmission occasion 4. The terminal further reports the first indication information on the CG transmission occasion 3, and the first indication information indicates that the CG transmission occasion 6 is unused. After receiving the first indication information, the RAN node determines that the terminal does not use the CG transmission occasion 6, and the RAN node may further determine that the terminal does not use the CG transmission occasion 7 either.

The terminal receives four data packets before the CG transmission occasion 1 within the 2nd CG periodicity, but does not receive the tail packet indicator. In other words, the terminal has not received a last data packet, and the terminal receives one data packet and receives the tail packet indicator on the CG transmission occasion 3. Therefore, the terminal sends the data packets on the CG transmission occasion 1 to the CG transmission occasion 5. Because the first configuration information is used to configure that the first indication information is reported once every other CG transmission occasion, the first configuration information is further used to configure that an interval between a CG transmission occasion that is unused within the CG period and a CG transmission occasion on which the first indication information is carried is two CG transmission occasions, and the CG transmission occasion 6 and the CG transmission occasion 7 are unused, the terminal reports the first indication information on the CG transmission occasion 1, and the first indication information indicates that the CG transmission occasion 4 is used. After receiving the first indication information, the RAN node determines that the terminal needs to use the CG transmission occasion 4. The terminal further reports the first indication information on the CG transmission occasion 3, and the first indication information indicates that the CG transmission occasion 6 is unused. After receiving the first indication information, the RAN node determines that the terminal does not use the CG transmission occasion 6, and the RAN node may further determine that the terminal does not use the CG transmission occasion 7 either.

Embodiments mentioned above in this application may be combined when the solutions do not conflict. This is not limited.

The foregoing mainly describes the solutions provided in this application from a perspective of interaction between network elements. Correspondingly, this application further provides a communication apparatus. The communication apparatus may be the RAN node in the foregoing method embodiments, or an apparatus including the foregoing RAN node, or a component that can be configured for the RAN node. Alternatively, the communication apparatus may be the terminal in the foregoing method embodiments, or an apparatus including the foregoing terminal, or a component that can be configured for the terminal. It may be understood that to implement the foregoing functions, the foregoing RAN node or terminal includes corresponding hardware structures and/or software modules for implementing the functions. A person skilled in the art should be easily aware that, in combination with units and algorithm operations of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

It should be understood that interaction between network elements is described above by using the terminal and a network device as an example. Actually, processing performed by the terminal is not limited to being performed only by a single network element, and processing performed by the RAN node is not limited to being performed only by a single network element. For example, processing performed by the RAN node may be performed by at least one of a CU, a DU, and an RU.

In this application, functional modules of the RAN node or the terminal may be obtained through division based on the foregoing method examples. For example, each functional module may be obtained through division based on each corresponding function, or two or more functions may be integrated into one processing module. The integrated module may be implemented in a form of hardware, or may be implemented in a form of a software functional module. It may be understood that, in this application, module division is an example, and is merely logical function division. In an actual implementation, there may be another division manner.

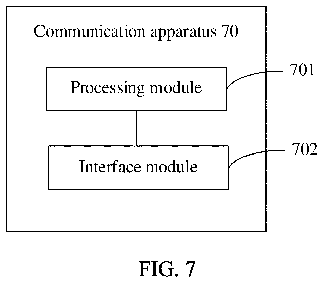

For example, when the functional modules are obtained through division in an integrated manner, FIG. 7 is a diagram of a structure of a communication apparatus 70. The communication apparatus 70 includes a processing module 701 and an interface module 702. The processing module 701 may also be referred to as a processing unit, and is configured to perform an operation other than receiving and sending operations. For example, the processing module 701 may be a processing circuit or a processor. The interface module 702 may also be referred to as an interface unit, and is configured to perform receiving and sending operations. For example, the interface module 702 may be an interface circuit, a transceiver machine, a transceiver, or a communication interface.

In some embodiments, the communication apparatus 70 may further include a storage module (not shown in FIG. 7), configured to store program instructions and data.

For example, the communication apparatus 70 is configured to implement a function of a terminal. For example, the communication apparatus 70 is the terminal described in the embodiment shown in FIG. 4.

The processing module 701 is configured to obtain first configuration information. The first configuration information is used to configure a reporting periodicity of first indication information, and the first indication information indicates a CG transmission occasion that is unused within a CG period or a CG transmission occasion that is used within a CG period. For example, the processing module 701 may be configured to perform S401.

The interface module 702 is configured to send the first indication information on at least one CG transmission occasion within the CG period based on the reporting periodicity. For example, the interface module 702 may be configured to perform S402.

In a possible implementation, the reporting periodicity is N+1 or N, N represents a quantity of CG transmission occasions between two adjacent CG transmission occasions on which the first indication information is carried within the CG period, and N is an integer greater than or equal to 0; or the reporting periodicity is T, and T represents a time difference between two adjacent CG transmission occasions on which the first indication information is carried within the CG period.

In a possible implementation, the first configuration information is further used to configure a 1st CG transmission occasion on which the first indication information is carried within the CG period.

In a possible implementation, the at least one CG transmission occasion includes a first CG transmission occasion and a second CG transmission occasion, and the first CG transmission occasion precedes the second CG transmission occasion; and a quantity of unused CG transmission occasions indicated by the first indication information carried on the first CG transmission occasion is M1, a quantity of unused CG transmission occasions indicated by the first indication information carried on the second CG transmission occasion is M2, and M1 is less than M2; or a quantity of used CG transmission occasions indicated by the first indication information carried on the first CG transmission occasion is M3, a quantity of used CG transmission occasions indicated by the first indication information carried on the second CG transmission occasion is M4, and M3 is greater than M4.

In a possible implementation, the quantity of unused CG transmission occasions or the quantity of used CG transmission occasions is related to a buffer state of the terminal.

In a possible implementation, the first configuration information is further used to configure a first interval, the at least one CG transmission occasion includes a third CG transmission occasion, the first indication information carried on the third CG transmission occasion indicates that the unused CG transmission occasions include a fourth CG transmission occasion, and there is the first interval between the third CG transmission occasion and the fourth CG transmission occasion.

In a possible implementation, the unused CG transmission occasions further include a CG transmission occasion following the fourth CG transmission occasion within the CG period.

In a possible implementation, an interval between each CG transmission occasion of the at least one CG transmission occasion and a CG transmission occasion that is unused within the CG period is greater than a first threshold.

In a possible implementation, the first configuration information is further used to configure the first threshold.

In a possible implementation, the first configuration information is further used to configure a CG transmission occasion within the CG period.

When the communication apparatus 70 is configured to implement the function of the terminal, for other functions that can be implemented by the communication apparatus 70, refer to the related descriptions of the embodiment shown in FIG. 4. Details are not described again.

Alternatively, for example, the communication apparatus 70 is configured to implement a function of a RAN node. For example, the communication apparatus 70 is the RAN node in the embodiment shown in FIG. 4.

The processing module 701 is configured to output first configuration information. The first configuration information is used to configure a reporting periodicity of first indication information, and the first indication information indicates a configured grant CG transmission occasion that is unused within a CG period or a CG transmission occasion that is used within a CG period. For example, the processing module 701 may be configured to perform S401.

The interface module 702 is configured to receive the first indication information on at least one CG transmission occasion within the CG period based on the reporting periodicity. For example, the interface module 702 may be configured to perform S402.

In a possible implementation, the reporting periodicity is N+1 or N, N represents a quantity of CG transmission occasions between two adjacent CG transmission occasions on which the first indication information is carried within the CG period, and N is an integer greater than or equal to 0; or the reporting periodicity is T, and T represents a time difference between two adjacent CG transmission occasions on which the first indication information is carried within the CG period.

In a possible implementation, the first configuration information is further used to configure a 1st CG transmission occasion on which the first indication information is carried within the CG period.

In a possible implementation, the at least one CG transmission occasion includes a first CG transmission occasion and a second CG transmission occasion, and the first CG transmission occasion precedes the second CG transmission occasion; and a quantity of unused CG transmission occasions indicated by the first indication information carried on the first CG transmission occasion is M1, a quantity of unused CG transmission occasions indicated by the first indication information carried on the second CG transmission occasion is M2, and M1 is less than M2; or a quantity of used CG transmission occasions indicated by the first indication information carried on the first CG transmission occasion is M3, a quantity of used CG transmission occasions indicated by the first indication information carried on the second CG transmission occasion is M4, and M3 is greater than M4.

In a possible implementation, the first configuration information is further used to configure a first interval, the at least one CG transmission occasion includes a third CG transmission occasion, the first indication information carried on the third CG transmission occasion indicates that the unused CG transmission occasions include a fourth CG transmission occasion, and there is the first interval between the third CG transmission occasion and the fourth CG transmission occasion.

In a possible implementation, the unused CG transmission occasions further include a CG transmission occasion following the fourth CG transmission occasion within the CG period.

In a possible implementation, an interval between each CG transmission occasion of the at least one CG transmission occasion and a CG transmission occasion that is unused within the CG period is greater than a first threshold.

In a possible implementation, the first configuration information is further used to configure the first threshold.

In a possible implementation, the first configuration information is further used to configure a CG transmission occasion within the CG period.

When the communication apparatus 70 is configured to implement the function of the terminal, for other functions that can be implemented by the communication apparatus 70, refer to the related descriptions of the embodiment shown in FIG. 4. Details are not described again.

In a simple embodiment, a person skilled in the art may figure out that the communication apparatus 70 may be in a form shown in FIG. 3. For example, the processor 301 in FIG. 3 may invoke the computer-executable instructions stored in the memory 303, to enable the communication apparatus 70 to perform the method in the foregoing method embodiments.

For example, functions/implementation processes of the processing module 701 and the interface module 702 in FIG. 7 may be implemented by the processor 301 in FIG. 3 by invoking the computer-executable instructions stored in the memory 303. Alternatively, a function/an implementation process of the processing module 701 in FIG. 7 may be implemented by the processor 301 in FIG. 3 by invoking the computer-executable instructions stored in the memory 303, and a function/an implementation process of the interface module 702 in FIG. 7 may be implemented by using the communication interface 304 in FIG. 3.

It may be understood that, one or more of the foregoing modules or units may be implemented by using software, hardware, or a combination thereof. When any one of the foregoing modules or units is implemented by software, the software exists in a form of a computer program instruction, and is stored in the memory. The processor may be configured to execute the program instruction and implement the foregoing method procedure. The processor may be built into a SoC (system on chip) or an ASIC, or may be an independent semiconductor chip. In addition to the core configured to perform calculation or processing by executing a software instruction, the processor may further include a necessary hardware accelerator, for example, a field programmable gate array (field programmable gate array, FPGA), a PLD (programmable logic device), or a logic circuit that implements a dedicated logic operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, this application further provides a chip system. The chip system includes at least one processor and an interface. The at least one processor is coupled to a memory via an interface, and when the at least one processor executes a computer program or instructions in the memory, the method in any one of the foregoing method embodiments is performed. In a possible implementation, the chip system further includes the memory. Optionally, the chip system may include a chip, or may include a chip and another discrete component. This is not specifically limited in this application.

Optionally, this application further provides a computer-readable storage medium. All or some of the procedures in the foregoing method embodiments may be implemented by a computer program instructing related hardware. The program may be stored in the computer-readable storage medium. When the program is executed, the procedures in the foregoing method embodiments may be included. The computer-readable storage medium may be an internal storage unit of the communication apparatus according to any one of the foregoing embodiments, for example, a hard disk drive or an internal memory of the communication apparatus. Alternatively, the computer-readable storage medium may be an external storage device of the communication apparatus, for example, a plug-in hard disk drive, a smart media card (smart media card, SMC), a secure digital (secure digital, SD) card, or a flash card (flash card) that is configured on the communication apparatus. Further, the computer-readable storage medium may include both an internal storage unit and an external storage device of the communication apparatus. The computer-readable storage medium is configured to store the computer program and store other programs and data that are required by the communication apparatus. The computer-readable storage medium may be further configured to temporarily store data that has been output or is to be output.

Optionally, this application further provides a computer program product. All or some of the procedures in the foregoing method embodiments may be implemented by a computer program instructing related hardware. The program may be stored in the computer program product. When the program is executed, the procedures in the foregoing method embodiments may be included.

Optionally, this application further provides computer instructions. All or some of the procedures in the foregoing method embodiments may be implemented by the computer instructions instructing related hardware (for example, a computer, a processor, a RAN node, or a terminal). A program may be stored in the computer-readable storage medium or the computer program product.

Optionally, this application further provides a communication system, including the RAN node and the terminal in the foregoing embodiments.

The foregoing descriptions about implementations allow a person skilled in the art to clearly understand that, for the purpose of convenient and brief descriptions, division of the foregoing functional modules is used as an example for illustration. During actual application, the foregoing functions can be allocated to different modules and implemented as required, to be specific, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1. An information transmission method, wherein the method comprises:

   obtaining first configuration information, wherein the first configuration information is used to configure a reporting periodicity of first indication information, and the first indication information indicates a configured grant CG transmission occasion that is unused within a CG period or a CG transmission occasion that is used within a CG period; and
   sending the first indication information on at least one CG transmission occasion within the CG period based on the reporting periodicity.

2. The method according to claim 1, wherein

   the reporting periodicity is N+1 or N, N represents a quantity of CG transmission occasions between two adjacent CG transmission occasions on which the first indication information is carried within the CG period, and N is an integer greater than or equal to 0; or
   the reporting periodicity is T, and T represents a time difference between two adjacent CG transmission occasions on which the first indication information is carried within the CG period.

3. The method according to claim 1 or 2, wherein the first configuration information is further used to configure a 1st CG transmission occasion on which the first indication information is carried within the CG period.

4. The method according to any one of claims 1 to 3, wherein the at least one CG transmission occasion comprises a first CG transmission occasion and a second CG transmission occasion, and the first CG transmission occasion precedes the second CG transmission occasion; and
a quantity of unused CG transmission occasions indicated by the first indication information carried on the first CG transmission occasion is M1, a quantity of unused CG transmission occasions indicated by the first indication information carried on the second CG transmission occasion is M2, and M1 is less than M2; or a quantity of used CG transmission occasions indicated by the first indication information carried on the first CG transmission occasion is M3, a quantity of used CG transmission occasions indicated by the first indication information carried on the second CG transmission occasion is M4, and M3 is greater than M4.

5. The method according to any one of claims 1 to 4, wherein the method is applied to a terminal, and the quantity of unused CG transmission occasions or the quantity of used CG transmission occasions is related to a buffer state of the terminal.

6. The method according to any one of claims 1 to 5, wherein the first configuration information is further used to configure a first interval, the at least one CG transmission occasion comprises a third CG transmission occasion, the first indication information carried on the third CG transmission occasion indicates that the unused CG transmission occasions comprise a fourth CG transmission occasion, and there is the first interval between the third CG transmission occasion and the fourth CG transmission occasion.

7. The method according to claim 6, wherein the unused CG transmission occasions further comprise a CG transmission occasion following the fourth CG transmission occasion within the CG period.

8. The method according to any one of claims 1 to 5, wherein an interval between each CG transmission occasion of the at least one CG transmission occasion and a CG transmission occasion that is unused within the CG period is greater than a first threshold.

9. The method according to claim 8, wherein the first configuration information is further used to configure the first threshold.

10. An information transmission method, wherein the method comprises:

   outputting first configuration information, wherein the first configuration information is used to configure a reporting periodicity of first indication information, and the first indication information indicates a configured grant CG transmission occasion that is unused within a CG period or a CG transmission occasion that is used within a CG period; and
   receiving the first indication information on at least one CG transmission occasion within the CG period based on the reporting periodicity.

11. The method according to claim 10, wherein

   the reporting periodicity is N+1 or N, N represents a quantity of CG transmission occasions between two adjacent CG transmission occasions on which the first indication information is carried within the CG period, and N is an integer greater than or equal to 0; or
   the reporting periodicity is T, and T represents a time difference between two adjacent CG transmission occasions on which the first indication information is carried within the CG period.

12. The method according to claim 10 or 11, wherein the first configuration information is further used to configure a $1^{st}$ CG transmission occasion on which the first indication information is carried within the CG period.

13. The method according to any one of claims 10 to 12, wherein the at least one CG transmission occasion comprises a first CG transmission occasion and a second CG transmission occasion, and the first CG transmission occasion precedes the second CG transmission occasion; and
   a quantity of unused CG transmission occasions indicated by the first indication information carried on the first CG transmission occasion is M1, a quantity of unused CG transmission occasions indicated by the first indication information carried on the second CG transmission occasion is M2, and M1 is less than M2; or a quantity of used CG transmission occasions indicated by the first indication information carried on the first CG transmission occasion is M3, a quantity of used CG transmission occasions indicated by the first indication information carried on the second CG transmission occasion is M4, and M3 is greater than M4.

14. The method according to any one of claims 10 to 13, wherein the first configuration information is further used to configure a first interval, the at least one CG transmission occasion comprises a third CG transmission occasion, the first indication information carried on the third CG transmission occasion indicates that the unused CG transmission occasions comprise a fourth CG transmission occasion, and there is the first interval between the third CG transmission occasion and the fourth CG transmission occasion.

15. The method according to claim 14, wherein the unused CG transmission occasions further comprise a CG transmission occasion following the fourth CG transmission occasion within the CG period.

16. The method according to any one of claims 10 to 13, wherein an interval between each CG transmission occasion of the at least one CG transmission occasion and a CG transmission occasion that is unused within the CG period is greater than a first threshold.

**17.** The method according to claim 16, wherein the first configuration information is further used to configure the first threshold.

**18.** A communication apparatus, comprising at least one processor, wherein the at least one processor is coupled to a memory, the memory is configured to store a program or instructions, and when the program or the instructions are executed by the at least one processor, the apparatus is enabled to perform the method according to any one of claims 1 to 9.

**19.** A communication apparatus, comprising at least one processor, wherein the at least one processor is coupled to a memory, the memory is configured to store a program or instructions, and when the program or the instructions are executed by the at least one processor, the apparatus is enabled to perform the method according to any one of claims 10 to 17.

**20.** A computer-readable storage medium, wherein the computer-readable storage medium stores a computer program or instructions, and when the computer program or the instructions are executed, a computer is enabled to perform the method according to any one of claims 1 to 9 or the method according to any one of claims 10 to 17.

**21.** A computer program product, wherein the computer program product comprises computer program code, and when the computer program code is run on a computer, the computer is enabled to implement the method according to any one of claims 1 to 9 or implement the method according to any one of claims 10 to 17.

**22.** A communication apparatus, comprising a unit or a module configured to perform the method according to any one of claims 1 to 9.

**23.** A communication apparatus, comprising a unit or a module configured to perform the method according to any one of claims 10 to 17.

**24.** A communication system, comprising the communication apparatus configured to perform the method according to any one of claims 1 to 9 and/or the communication apparatus configured to perform the method according to any one of claims 10 to 17.

FIG. 1A

FIG. 1B

FIG. 2

_30_

Processor _301_

CPU 0

CPU 1

Processor _307_

CPU 0

CPU 1

_303_

Memory

Communication line 302

_304_

Communication interface

_305_

Output device

_306_

Input device

## FIG. 3

RAN node

S401 — Output first configuration information

Terminal

Obtain the first configuration information — S401

S402: First indication information

## FIG. 4

Reporting periodicity

Reporting periodicity

CG transmission occasion

1   2   3   4   5   6   7

CG periodicity

Time domain

## FIG. 5A

FIG. 5B

FIG. 6A

FIG. 6B

Communication apparatus 70

Processing module — 701

Interface module — 702

FIG. 7

# EP 4 626 110 A1

## INTERNATIONAL SEARCH REPORT

| | International application No. |
|---|---|
| | **PCT/CN2024/074753** |

**A. CLASSIFICATION OF SUBJECT MATTER**

H04W72/1263(2023.01)i

According to International Patent Classification (IPC) or to both national classification and IPC

**B. FIELDS SEARCHED**

Minimum documentation searched (classification system followed by classification symbols)

IPC:H04W72/-; H04W24/-; H04L12/-

Documentation searched other than minimum documentation to the extent that such documents are included in the fields searched

Electronic data base consulted during the international search (name of data base and, where practicable, search terms used)

CNKI, CJFD, CNABS, CNTXT, 万方, WANFANG, ENTXTC, WPABSC: 不, 传输, 传输时机, 调度, 调度请求, 反馈, 利用, 配置, 配置上行授权, 配置授权, 配置许可, 上报, 上传, 时段, 时间, 使用, 是否, 授权, 授权配置, 需求, 许可, 占用, 指示, 周期, 资源, CG, SR, TB, UCI; ENTXT, WPABS, 3GPP, IEEE: apply, CG, duration, feedback, gap, interval, period, report, slot, SR, TB, UCI, use, occup, configured grant, config

**C. DOCUMENTS CONSIDERED TO BE RELEVANT**

| Category* | Citation of document, with indication, where appropriate, of the relevant passages | Relevant to claim No. |
|---|---|---|
| A | CN 114375064 A (GUANGDONG OPPO MOBILE TELECOMMUNICATIONS CORP., LTD.) 19 April 2022 (2022-04-19)<br>entire document | 1-24 |
| A | CN 114051763 A (BEIJING XIAOMI MOBILE SOFTWARE CO., LTD.) 15 February 2022 (2022-02-15)<br>entire document | 1-24 |
| A | CN 111148225 A (HUAWEI TECHNOLOGIES CO., LTD.) 12 May 2020 (2020-05-12)<br>entire document | 1-24 |
| A | CN 111432423 A (HUAWEI TECHNOLOGIES CO., LTD.) 17 July 2020 (2020-07-17)<br>entire document | 1-24 |
| A | CN 113132268 A (HUAWEI TECHNOLOGIES CO., LTD.) 16 July 2021 (2021-07-16)<br>entire document | 1-24 |
| A | US 2022225290 A1 (LENOVO (SINGAPORE) PTE. LTD.) 14 July 2022 (2022-07-14)<br>entire document | 1-24 |

☑ Further documents are listed in the continuation of Box C. ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **08 April 2024** | **09 April 2024** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**EP 4 626 110 A1**

| INTERNATIONAL SEARCH REPORT | International application No. |
|---|---|
| | PCT/CN2024/074753 |

### C. DOCUMENTS CONSIDERED TO BE RELEVANT

| Category* | Citation of document, with indication, where appropriate, of the relevant passages | Relevant to claim No. |
|---|---|---|
| A | US 2021036822 A1 (HUAWEI TECHNOLOGIES CO., LTD.;) 04 February 2021 (2021-02-04) entire document | 1-24 |
| A | WO 2022131981 A1 (TELEFONAKTIEBOLAGET LM ERICSSON (PUBL)) 23 June 2022 (2022-06-23) entire document | 1-24 |

Form PCT/ISA/210 (second sheet) (July 2022)

33

**INTERNATIONAL SEARCH REPORT**
Information on patent family members

International application No.

**PCT/CN2024/074753**

| Patent document cited in search report | | | Publication date (day/month/year) | Patent family member(s) | | | Publication date (day/month/year) |
|---|---|---|---|---|---|---|---|
| CN | 114375064 | A | 19 April 2022 | WO | 2021088021 | A1 | 14 May 2021 |
| | | | | CN | 113940129 | A | 14 January 2022 |
| | | | | MX | 2022005352 | A1 | 02 June 2022 |
| | | | | KR | 20220098726 | A | 12 July 2022 |
| | | | | BR | 112022008710 | A2 | 19 July 2022 |
| | | | | VN | 88203 | A | 25 July 2022 |
| | | | | US | 2022248441 | A1 | 04 August 2022 |
| | | | | EP | 4044736 | A1 | 17 August 2022 |
| | | | | EP | 4044736 | A4 | 31 August 2022 |
| | | | | IN | 202227029844 | A | 30 September 2022 |
| | | | | JP | 2023506369 | W | 30 September 2022 |
| | | | | CN | 11437506 | B | 28 July 2023 |
| | | | | EP | 4044736 | B1 | 28 July 2023 |
| CN | 114051763 | A | 15 February 2022 | WO | 2023050212 | A1 | 06 April 2023 |
| CN | 111148225 | A | 12 May 2020 | WO | 2020088400 | A1 | 07 May 2020 |
| | | | | CN | 111148225 | B | 16 September 2022 |
| CN | 111432423 | A | 17 July 2020 | WO | 2020143630 | A1 | 16 July 2020 |
| | | | | CN | 111432423 | B | 19 November 2021 |
| CN | 113132268 | A | 16 July 2021 | WO | 2021136213 | A1 | 08 July 2021 |
| US | 2022225290 | A1 | 14 July 2022 | BR | 112022008493 | A2 | 26 July 2022 |
| | | | | EP | 4055871 | A1 | 14 September 2022 |
| | | | | WO | 2021090248 | A1 | 14 May 2021 |
| | | | | MX | 2022005586 | A | 27 October 2022 |
| US | 2021036822 | A1 | 04 February 2021 | US | 11323223 | B2 | 03 May 2022 |
| | | | | WO | 2021018138 | A1 | 04 February 2021 |
| WO | 2022131981 | A1 | 23 June 2022 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310139593